# EUROPÄISCHE PATENTSCHRIFT

(11) **EP 0 894 895 B1**
(45) Veröffentlichungstag und Bekanntmachung des Hinweises auf die Patenterteilung: **15.10.2003**
(21) Anmeldenummer: 98112621.2
(22) Anmeldetag: 08.07.1998
(51) Int. Cl.: D21G 9/00

(54) **Verfahren und Vorrichtung zur Erkennung und Korrektur einer Faserorientierungs-Querprofil-Veränderung**
Process and apparatus for detecting and correcting changes in the transvers fibre orientation profile
Procédé et dispositif de détection et de correction des changements du profil transversal d'orientation des fibres

(30) Priorität: 02.08.1997 DE 19733454
(43) Veröffentlichungstag der Anmeldung: 03.02.1999
(73) Patentinhaber: Voith Paper Patent GmbH, 89522 Heidenheim (DE)
(72) Erfinder: Ruf, Wolfgang, 89542 Herbrechtingen-Bolheim (DE); Loser, Hans, 89129 Langenau (DE); Begemann, Ulrich, 89522 Heidenheim (DE); Lehleiter, Klaus, 88512 Mengen (DE)

(56) Entgegenhaltungen:
- EP-A- 0 408 894
- WO-A-89/11561
- DE-A- 4 239 845

## Beschreibung

Die Erfindung betrifft ein Verfahren zur Erkennung und Korrektur einer Änderung des Faserorientierungs-Querprofils einer Papier- oder Kartonbahn im Herstellungsprozeß einer Papier- oder Kartonmaschine. Weiterhin betrifft die Erfindung eine Vorrichtung zur Erkennung einer Änderung des Faserorientierungs-Querprofils im Herstellungsprozeß.

Bei der Herstellung einer Papier- oder Kartonbahn gibt es im Herstellungsprozeß zahlreiche Störfaktoren, die die Bahneigenschaft der Papier- oder Kartonbahn, bezüglich ihrer Gleichmäßigkeit über die Maschinenbreite hinweg, negativ beeinflussen können. Zu diesen Störungsfaktoren gehören beispielsweise Temperaturschwankungen, Druckschwankungen, Fertigungstoleranzen, aber auch Veränderungen der Maschine aufgrund eines stetigen Verschleißes. Zwei wesentliche Bahneigenschaften, welche die Qualität des erzeugten Papieres beeinflussen, sind die gewünschte, meist gleichmäßige Massenverteilung des Papieres und die gewünschte, meist gleichmäßige Orientierung der Fasern im Papier.

Die gleichmäßige Massenverteilung sorgt für ein gutes Flächengewichts-Querprofil und eine damit einhergehende gleichmäßige Dicke der Papierlage, während eine gleichmäßige und richtig ausgerichtete Faserorientierung das Reißlängenverhältnis, den "Curl" von Kopierpapieren und auch die Laufeigenschaften von Rollenpapieren wesentlich mitbestimmt. Es wird in diesem Zusammenhang auf die Schriften Robert A. Brauns, APPITA 1995, 229 bis 234; Scott B.Pantaleo, TAPPI Proceedings, 1994, 259 bis 264 und Wochenblatt für Papierfabrikation 123, Februar 1995, Nr. 4, Seite 121 bis 126 verwiesen.

Zur Erkennung und Beeinflussung eines Bahneigenschaftsprofils, wie dem Flächengewichts-Querprofil einer Papier- oder Kartonbahn ist aus der Patentschrift DE 35 35 849 bekannt, das Flächengewichts-Querprofil einer Papierbahn zu messen und entsprechend der gewünschten Veränderung die Weite des Auslaufspaltes eines Stoffauflaufes an bestimmten Stellen der Bahnbreite so zu verändern, daß sich der Durchsatz der Stoffsuspension entsprechend örtlich verändert. Die Änderung des Durchsatzes der Stoffsuspension mit über die Maschinenbreite gleicher Konzentration bewirkt eine Einflußnahme auf die Menge der Feststoffe an dieser Stelle der Bahn und somit eine Einstellung des Flächengewichts-Querprofils.

In einer anderen Patentanmeldung DE 40 19 593 A1 wird eine Vorrichtung und ein Verfahren zur Regelung des Flächenmasseprofils der Bahn offenbart. In diesem Verfahren soll bei einem Abweichen des Flächenmasseprofils der Papierbahn an einer bestimmten Stelle der Bahnbreite die Konzentration des Stoffsuspensionsstromes an dieser Stelle geändert werden. Um dies zu erreichen wird vorgeschlagen, den Stoffauflauf, zumindestens teilweise, über die Maschinenbreite zu sektionieren und mit Hilfe von geregelten Sektionsströmen mit individuell einstellbarer Konzentration zu beschicken. Die individuelle Einstellung der Konzentration des jeweiligen Sektionsstromes erfolgt durch eine Regelung der Zuströmverhältnisse zweier Einzelströme mit konstanter, jedoch unterschiedlicher Konzentration. Aufgrund des unterschiedlichen Gehaltes der Sektionsströme an Faserstoff, Asche und sonstiger Zuschlagstoffe ergibt sich eine Änderung des Flächengewichts an der entsprechenden Stelle der Bahnbreite.

Regelverfahren zur sektionalen Verstellung der Stoffaufläufe sind beispielsweise aus den Patentanmeldungen DE 42 38 037 und DE 40 05 281 bekannt. Bei diesen Regelverfahren wird jeweils das Flächenmasse-Querprofil an der Papierbahn abgegriffen und entsprechend der Veränderungen des Flächenmasse-Querprofils vom Idealzustand, die entsprechenden Stellglieder im Stoffauflauf verstellt, um das gewünschte Flächenmasse-Querprofil zu erreichen.

Eine ähnliche Steuer-/Regeleinrichtung, sowie ein Verfahren zur Regelung des Flächengewichts-Querprofils und des Faserorientierungs-Querprofils ist aus der Patentanmeldung DE 42 39 845 der Anmelderin bekannt. Diese Anmeldung sieht vor, den Stoffauflauf ebenfalls, zumindestens teilweise, sektional auszubilden und die Papierstoffsuspension in den einzelnen Sektionen durch eine Zuspeisung von Verdünnungswasser oder anderen Fluiden in seiner Konsistenz und/oder Faserorientierung zu beeinflussen, um so das entsprechende Querprofil zu regeln. Es wird allerdings in dieser Schrift nicht angegeben, wie die Veränderung eines Faserorientierungs-Querprofils gemessen werden kann.

Es wird weiterhin auf die Patentschrift DE 196 34 997 hingewiesen, die eine Regeleinrichtung mit einer Mehrzahl von Meßsensoren und ein Verfahren zur Regelung von verschiedenen Bahneigenschaftsprofilen beschreibt. Das in dieser Patentschrift beschriebene Meßverfahren, durch eine Mehrzahl von Meßsensoren zur Bestimmungen der Bahndicke, beschreibt ein Meßverfahren zur Bestimmung von getrennten Flächengewichts-Querprofilen und Flächengewichts-Längsprofilen an einer Papierbahn, wobei die hierdurch bestimmten Flächengewichts-Querprofile frei von Komponenten des Flächengewichts-Längsprofils dargestellt werden können. Ein ähnliches Verfahren ist auch aus der DE 20 19 975 bekannt.

Es wird ebenfalls auf die Patentschrift DE 196 34 996 hingewiesen, die einen sektional stoffdichtegeregelten Stoffauflauf mit einer Papierstoffkonsistenz-Regelung offenbart. Ebenso offenbaren die Patentanmeldungen DE 42 11 291 und DE 42 11 290 eine Sektionale Stoffdichteregelung eines Stoffauflaufes mit einem einzigen Ventil je Sektion bei gleichbleibendem Volumenstrom und die Patentanmeldungen DE 40 19 593 und DE 41 12 347 zeigen eine Stoffdichteregelung und Volumenstromregelung für einen sektionierten Stoffauflauf, mit zwei Ventilen je Sektion.

Der Inhalt aller oben genannten Patentschriften wird hiermit vollumfänglich, ohne daß hierauf weiter Bezug genommen wird, in den Offenbarungsgehalt dieser Anmeldung aufgenommen.

In dem oben genannten Stand der Technik sind zwar mehrfach Möglichkeiten dargestellt, mit denen ein Faserorientierungs-Querprofil einer Papierbahn durch den Stoffauflauf beeinflußt werden kann, jedoch ist in keiner dieser Schriften dargelegt, wie eine Änderung des Faserorientierungs-Querprofils oder das Faserorientierungs-Querprofil selbst "on line" während des Betriebes der Papiermaschine gemessen werden kann. Die derzeit bekannten Meßmethoden des Faserorientierungs-Querprofils sind "on line" nicht durchführbar beziehungsweise würden einen extrem hohen Kostenaufwand erfordern.

Es besteht daher das Problem, daß, bevor eine vernünftige, kontinuierliche Regelung des Faserorientierungs-Querprofils an einer laufenden Papiermaschine durchgeführt werden kann, ein preisgünstiges Verfahren zur Erkennung einer Änderung eines Faserorientierungs -Querprofils notwendig ist. Aus der Patentanmeldung EP-A-0 408 894 ist ein Verfahren zur "on line"-Messung des Faserorientierungs-Querprofils einer Papierbahn im Herstellungsprozeß auf einer Papiermaschine bekannt. Bei diesem Verfahren werden mittels Meßdurchgänge Daten über die Beziehung zwischen dem Faserorientierungs-Querprofil und dem Flächengewichts-Querprofil einer Papierbahn gesammelt und gespeichert. Das Faserorientierungs-Querprofil der Papierbahn wird "on line" mittels dieser Daten und des "on line" gemessenen Flächengewichts-Querprofils bestimmt.

Die Aufgabe der Erfindung besteht darin, ein preisgünstiges und "on line" durchführbares Verfahren zur Erkennung einer Änderung des Faserorientierungs-Querprofils einer Papier- oder Kartonbahn im Herstellungsprozeß auf einer Papier- oder Kartonmaschine zu beschreiben. Weiterhin ist es Aufgabe der Erfindung, ein "on line" durchführbares Verfahren zur Korrektur einer Veränderung des Faserorientierungs-Querprofils beziehungsweise ein entsprechendes Regelverfahren für ein voreingestelltes Faserorientierungs-Querprofil, zu beschreiben. Ebenso ist es Aufgabe der Erfindung Vorrichtungen zur Durchführung der erfindungsgemäßen Verfahren zu beschreiben.

Die erste Aufgabe der Erfindung wird durch die Merkmale des Anspruches 1 gelöst. Demgemäß wird bei dem erfindungsgemäßen Verfahren zur Erkennung einer Änderung der Faserorientierung einer Papier- oder Kartonbahn im Herstellungsprozeß auf einer Papier- oder Kartonmaschine über eine charakteristische Änderung des Flächengewichts-Querprofils beziehungsweise mindestens einer damit korrelierenden Meßgröße und/oder einer charakteristischen Änderung des Flächengewichts in Laufrichtung der Bahn beziehungsweise mindestens einer damit korrelierenden Meßgröße auf eine Änderung des Faserorientierungs-Querprofils in der Bahn geschlossen.

Die Erfinder haben erkannt, daß es möglich ist, durch die Analyse der Veränderung des Flächengewichts-Querprofils und/oder die Analyse des Flächengewichts-Längsprofils, das heißt des zeitlichen Verlaufs des Flächengewichts, während der Herstellung der Papierbahn, auf eine möglicherweise stattfindende Veränderung des Faserorientierungs-Querprofils zu schließen.

Betrachtet man die Ursache, die für eine Veränderung des Faserorientierungs-Querprofils einer Papierbahn im Herstellungsverfahren ursächlich sind, so zeigt sich, daß diese in der Regel mit einer Verformung des Stoffauflaufes einhergehen. Eine Verformung des Stoffauflaufes findet im laufenden Betrieb meist dann statt, wenn eine Temperaturänderung und/oder eine Druckänderung im Stoffauflauf stattfindet und es dadurch zu einer Veränderung der Stoffauflaufgeometrie kommt. Derartige Veränderungen besitzen einerseits einen charakteristischen Zeitverlauf und andererseits auch ein charakteristisches Änderungsprofil, das heißt diese Änderungen verlaufen über charakteristische Breiten der Bahn oder besitzen charakteristische Wellenlängen.

Es ist somit möglich, durch die Messung und Auswertung der Änderungen des Flächengewichts-Querprofils und/oder der Änderungen des Flächengewichts-Längsprofils, das heißt der Änderung des Flächengewichts im Zeitverlauf des Herstellungsprozesses auf eine Änderung der Faserorientierung, beziehungsweise des Faserorientierungs-Querprofils, zu schließen.

Eine Analyse des Flächengewichts-Querprofils kann beispielsweise durch eine Fourier-Analyse vorgenommen werden. Die Fourier-Analyse liefert ein charakteristisches Wellenlängenspektrum der Veränderungen. Finden diese Veränderungen in einem Wellenlängenbereich statt, der größer als eine bestimmte kritische Wellenlänge ist, so kann mit großer Sicherheit auf eine Veränderung des Faserorientierungs-Querprofils geschlossen werden. Die kritische Wellenlänge, ab welcher auf eine Veränderung des Faserorientierungs-Querprofils geschlossen wird, ist von Stoffauflauf zu Stoffauflauf individuell verschieden, da hier die jeweiligen konstruktionsbedingten Ausführungen Einfluß auf die Art der Verformung des Stoffauflaufes besitzen. Es ist daher notwendig, diese kritische Wellenlänge im Versuch genau zu bestimmen. In einer ersten Näherung kann jedoch davon ausgegangen werden, daß die kritische Wellenlänge im Bereich von mindestens 0,5 Meter oder mindestens 1/5 der Stoffauflaufweite, vorzugsweise 1/2 der lichten Breite (Maschinenbreite) der Stoffauflaufdüse, liegt.

In diesem Zusammenhang ist zu bemerken, daß es sich auf den Entscheidungsprozeß grundsätzlich positiv auswirkt, je geringer die Entfernung der Messung des Flächengewichts-Querprofils oder einer damit korrelierten Meßgröße vom Stoffauflauf stattfindet. Wird die Messung des Flächengewichts-Querprofils erst am Ende der Papiermaschine vorgenommen, so ist zwar immer noch eine Entscheidung mit hoher Trefferwahrscheinlichkeit möglich, jedoch wächst die Unsicherheit, da weitere Einflüsse aus der dem Stoffauflauf folgenden Maschine Störungen hervorrufen können.

Es wird demgemäß vorgeschlagen, zur Erkennung einer Änderung der Faserorientierung einer Papier-oder Kartonbahn im Herstellungsprozeß einer Papier-oder Kartonmaschine mindestens die folgenden Verfahrensschritte durchzuführen:
- Wiederholte Bestimmung des Flächengewichts-Querprofils der Bahn;
- Bestimmung der Änderung(en) des Flächengewichts-Querprofils;
- Bestimmung der Wellenlänge(n) λ der Änderungen(en) des Flächengewichts-Querprofils;
- Vergleich der Wellenlänge(n) der Änderung(en) des Flächengewichts-Querprofils mit einem vorgegebenen Werteraster zur Entscheidung, ob die jeweilige Änderung mit einer Änderung des Faserorientierungs-Querprofils einhergeht.

Gemäß dem Erfindungsgedanken ist es weiterhin auch möglich, auf eine Änderung des Faserorientierungs-Querprofils zu schließen, wenn ausschließlich das Flächengewichts-Längsprofil im Herstellungsprozeß der Papierbahn, das heißt des zeitlichen Verlaufs des Flächengewichts an einer bestimmten Position der Maschinenbreite, beobachtet wird. Betrachtet man die Ursachen für die Veränderung, so zeigt sich, daß im wesentlichen drei Gruppen von Veränderungen möglich sind.
1. Es kann sich um Instabilitäten im Konstantteil der Papiermaschine handeln. Diese Änderungen finden in der Regel mit relativ hohen Änderungsgeschwindigkeiten, vorzugsweise > 0,5 g/m² je Minute statt. Diese Veränderungen sind nicht mit einer Veränderung des Faserorientierungs-Querprofils verbunden.
2. Langsame Änderungen des Flächengewichts, vorzugsweise mit Änderungsgeschwindigkeiten < 0,5 g/m² je 10 Stunden. Diese Veränderungen deuten auf einen Einfluß in den Entwässerungsbedingungen im Naßteil hin, wie zum Beispiel einen kontinuierlichen Siebverschleiß, und gehen ebenfalls nicht mit einer Veränderung des Faserorientierungs-Querprofils einher.
3. Änderungen des Flächengewichts mit Änderungsgeschwindigkeiten zwischen den erstgenannten und zweitgenannten Bereich. Diese Veränderungen deuten in der Regel auf eine Verformung der Stoffauflaufgeometrie hin, die meist durch Temperaturschwankungen zustande kommt. Derartige Veränderungen an der Stoffauflaufgeometrie bedingen gleichzeitig eine Veränderung des Düsenauslaufspaltes und damit einhergehender Querströmungskomponenten in der Düse des Stoffauflaufes, die wiederum zu einer Veränderung des Faserorientierungs-Querprofils führen.

Aufgrund dieses Sachverhaltes wird erfindungsgemäß volgeschlagen zur Erkennung einer Änderung der Faserorientierung einer Papier- oder Kartonbahn im Herstellungsprozeß auf einer Papier- oder Kartonmaschine mindestens die folgenden Verfahrensschritte durchzuführen :
- Bestimmung des zeitlichen Verlaufes des Flächengewichts der Bahn an mindestens einer Position in der Maschinenbreite (Flächengewichts-Längsprofil);
- Bestimmung der zeitlichen Änderung(en) des Flächengewichts an der mindestens einen Position;
- Bestimmung der Änderungsgeschwindigkeit ΔFG/Δt beziehungsweise relativen Änderungsgeschwindigkeit des Flächengewichts an dieser mindestens einen Stelle;
- Vergleich der Änderungsgeschwindigkeit(en) mit einem vorgegebenen Werteraster zur Entscheidung, ob die jeweilige Änderungsgeschwindigkeit mit einer Änderung des Faserorientierungs-Querprofils einhergehen kann. Als relative Anderungsgeschwindigkeit kann beispielsweise die prozentuale Änderung des Flächengewichts zum Mittelwert des Flächengewichts über die gesamte Maschinenbreite herangezogen werden. Es könne aber auch sonstige fest vorgegebene Flächengewichtswerte als Bezugspunkt herangezogen werden.

Es wird darauf hingewiesen, daß mit dem Begriff "Bestimmung" nicht unbedingt eine exakte Messung des Flächengewichts gemeint ist, sondern daß hierdurch auch andere mit dem Flächengewicht korrelierende Meßgrößen herangezogen werden können, da hierbei lediglich eine Bestimmung der Änderung des Flächengewichts und nicht eine absolute Messung des Flächengewichts notwendig ist.

Eine Verbesserung der beiden letztdargestellten Verfahren zur Erkennung einer Änderung des Faserorientierungs-Querprofils läßt sich durch eine Kombination dieser beiden Verfahren erreichen. Hierbei wird von einer tatsächlichen Änderung des Faserorientierungs-Querprofils ausgegangen, wenn die Bedingungen der Kriterien beider letztgenannter Verfahren erfüllt sind.

Eine weitergehende Verbesserung des Erkennungsverfahrens einer Änderung der Faserorientierung in einer Papierbahn läßt sich dadurch erreichen, daß mit Hilfe mindestens zweier Sensoren das Flächengewichts-Querprofil und Flächengewichts-Längsprofil der Papierbahn gemessen wird, wobei aus einer relevanten Wellenlänge der Änderung des Flächengewichts-Querprofils auf eine mögliche Verformung des Stoffauflaufes geschlossen wird und zur Verifizierung dieser Änderung des Flächengewichts-Querprofils der Verlauf des Flächengewichts-Längsprofils an der Stelle dieses mindestens einen Maximums der Änderung des Flächengewichts-Querprofils bestimmt wird und aus dem charakteristischen zeitlichen Verlauf des Flächengewichts, beziehungsweise dem Flächengewichts-Längsprofils, die Änderungsgeschwindigkeit und/oder Änderungsfrequenz an dieser Stelle bestimmt wird, um auf eine mögliche Verformung des Stoffauflaufes und damit eine Beeinflussung des Faserorientierungs-Querprofils zu schließen.

Weitergehende erfindungsgemäße Ausgestaltungen der obengenannten Verfahren sind in den abhängingen Ansprüchen dargestellt und in der Figurenbeschreiburng angegeben.

Erfindungsgemäß wird auch eine Papier-oderKartonmaschine mit einer Vorrichtung zur Erkennung einer Änderung des Faserorientierungs Querprofils einer Papier- oder Kartonbahn im Herstellungsprozeß auf der Papier- oder Kartonmaschine vorgeschlagen, wobei die Vorrichtung mindestens einen Sensor mit einer Auswerteeinheit zur Bestimmung des Flächengewichts-Querprofils der Bahn oder eines Querprofils einer korrelierenden Größe und/oder mindestens einen Sensor mit einer Auswerteeinheit zur Bestimmung des zeitlichen Verlaufs des Flächengewichts-Längsprofils der Bahn an mindestens einer Position bezüglich der Maschinenbreite enthält. Weiterhin benötigt die Vorrichtung mindestens ein Mittel zur Bestimmung der Änderung(en) des Querprofils des Flächengewichts, beziehungsweise der korrelierenden Größe; und zur Bestimmung der Wellenlänge λ der Änderung(en) und/oder mindestens ein Mittel zur Bestimmung der Änderungsgeschwindigkeit ΔFG/Δt beziehungsweise der relativen Änderungsgeschwindigkeit des Flächengewichts an dieser mindestens einen Position bezüglich der Maschinenbreite mindestens ein Mittel zum Vergleich der Wellenlängen des Querprofils der Änderungen und/oder der Änderungsgeschwindigkeit(en) mit einem vorgegebenen Werteraster zur Entscheidung, ob die jeweilige Änderung und/oder Änderungsgeschwindigkeit mit einer Änderung des Faserorientierungs-Querprofils einhergehen kann; und eine Ausgabeeinheit zur

Anzeige der Änderung des Faserorientierungs-Querprofils.

Erfindungsgemäß können die obengenannten Mittel beispielsweise aus einer Recheneinheit mit entsprechenden Rechenprogrammen, beziehungsweise Rechenmodulen, bestehen. Vorzugsweise wird zur Bestimmung der Wellenlängen eine Fourier-Analyse durchgeführt und das spektrale Ergebnis der Fourier-Analyse entsprechend den vorher beschriebenen Verfahren ausgewertet.

Weitere Ausgestaltungen der Erfindung sind in den Unteransprüchen und in den nachfolgenden Figurenbeschreibungen dargestellt.

Weitere Merkmale und Vorteile der Erfindung ergeben sich aus der nachfolgenden Beschreibung bevorzugter Ausführungsbeispiele unter Bezugnahme auf die Zeichnung.

Die Figuren zeigen im einzelnen:
- Figur 1:: Graphische Darstellung von Spaltweite, Flächengewichts-Querprofil und Faserorientierungs-Querprofil im optimal eingestellten Anfahrzustand einer Papiermaschine;
- Figur 2:: Graphische Darstellung des zeitlichen Verlaufs der Spaltweite und des Flächengewichts;
- Figur 3:: Flächengewichts-Querprofile zu den Zeitpunkten t₁, t₂ und t₃;
- Figur 4:: Faserorientierungs-Querprofile zu den Zeitpunkten t₁, t₂ und t₃;
- Figur 5:: Graphische Darstellung der Werteraster zur Identifikation einer Änderung des Faserorientierungs-Querprofils;
- Figur 6:: Tabelle zu den Werterasten aus Figur 5;
- Figur 7:: Schematische Darstellung einer Papiermaschine mit einer erfindungsgemäßen Regeleinrichtung und einem sektional stoffdichtegeregelten Stoffauflauf mit geregelter, sektionaler Blendenverstellung;
- Figur 8:: Schematische Darstellung einer Papiermaschine mit einer erfindungsgemäßen Regeleinrichtung und einem sektional stoffdichtegeregelten und sektional volumenstromgeregelten Stoffauflauf mit Blendenverstellung;
- Figur 9:: Schematische Darstellung einer Papiermaschine mit einer erfindungsgemäßen Regeleinrichtung und einem sektional stoffdichtegeregelten und sektional volumenstromgeregelten Stoffauflauf mit Blendenverstellung und einem ortsfesten Sensor zwischen Stoffauflaufdüse und Formierteil;
- Figur 10:: Schematische Darstellung einer Papiermaschine mit einer erfindungsgemäßen Regeleinrichtung und einem sektional stoffdichtegeregelten und sektional volumenstromgeregelten Stoffauflauf, mit geregelter, sektionaler Blendenverstellung und drei Sensoren.

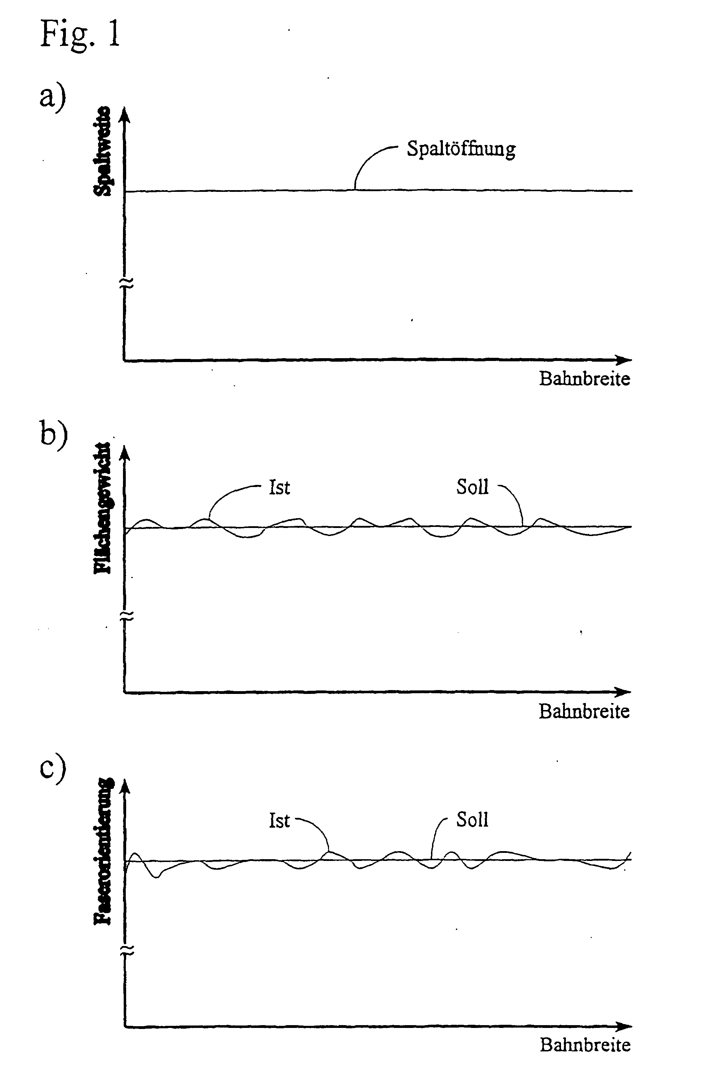

Der Grundgedanke der beschriebenen Erfindung liegt darin, daß es möglich ist aus dem Querprofil des Flächengewichts beziehungsweise einer damit korrelierenden Größe und/oder aus dem zeitlichen Verlauf einer Flächengewichtsänderung beziehungsweise einer damit korrelierten Größe zu erkennen, wann eine Änderung des Faserorientierungs-Querprofils stattfindet, ohne diese direkt zu messen. Da die Messung eines Faserorientierungs-Querprofils derzeit in der Praxis nur im "off line"-Verfahren möglich ist, beziehungsweise Verfahren, die eine derartige Messung "on line" ermöglichen würden, extrem teuer sind, besteht hierin die Möglichkeit mit einer preisgünstigen Meßmethode beim Herstellungsprozeß einer Papier- oder Kartonbahn im "on line"-Verfahren eine Korrektur oder genauer gesagt eine Konstanthaltung des Faserorientierungs-Querprofils zu erreichen. Dieses Grundprinzip wird an Hand der Figuren 1 bis 6 näher erläutert.

In der Figur 1 sind drei Größen im Betrieb einer Papiermaschine dargestellt, nachdem eine optimale Grundeinstellung vorgenommen wurde. Figur 1a zeigt ein Diagramm mit einem Koordinatensystem, in dem die Spaltweite gegenüber der Bahnbreite des Stoffauflaufspaltes dargestellt ist. Die Spaltweite verläuft über die gesamte Bahnbreite konstant in einer Höhe. Dies bedeutet, daß die Blende am Auslaufspalt des Stoffauflaufes so eingestellt ist, daß ein paralleler Spalt entstanden ist.

Die Figur 1b zeigt ein Flächengewichts-Querprofil über die Bahnbreite. Es ist der Sollwert des Flächengewichts und der tatsächliche Istzustand des Flächengewichts über die Bahnbreite dargestellt. Bei der Verwendung eines sektional stoffdichtegeregelten Stoffauflaufes können eventuelle Korrekturen im Flächengewicht durch eine Beeinflussung der sektionalen Stoffdichte eingestellt werden.

Entsprechend der oben dargestellten Situation des Flächengewichts und der Spaltweite zeigt die Figur 1c ein Diagramm, in dem die Faserorientierung gegen die Bahnbreite aufgetragen ist, also ein Faserorientierungs-Querprofil der Papierbahn. Da die Spaltweite konstant über die Breite gleich eingestellt ist, entspricht auch der Istzustand der Faserorientierung dem Sollwert des Faserorientierungs-Querprofils. Falls in dieser Anfahrsituation Änderungen des Faserorientierungs-Querprofils vorgenommen werden müssen, obwohl die Spaltweite am Stoffauflauf konstant ist, kann dieses bei einem sektional volumenstromgeregelten Stoffauflauf durch eine Einstellung der sektionalen Volumenströme erledigt werden. Ist keine sektionale Volumenstromeinstellung möglich, so muß die Korrektur an der Spaltweite des Stoffauflaufes vorgenommen werden.

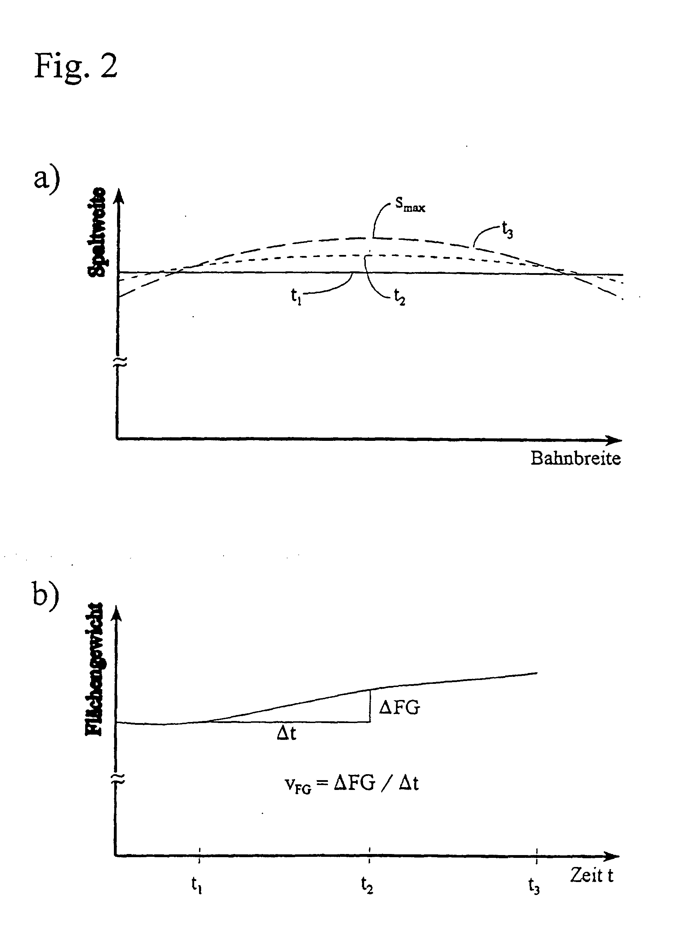

Im Betrieb der Papiermaschine des Stoffauflaufes wird es naturgemäß durch Temperaturschwankungen und sonstige weiter oben geschilderte Gegebenheiten zu Veränderungen des Stoffauflaufspaltes kommen. Die Figur 2 zeigt eine derartige Veränderung der Spaltweite über die Maschinenbreite hinweg in einem Diagramm. Es sind in diesem Diagramm drei Kurven der Spaltweite s zur Zeit t₁, t₂ und t₃ aufgetragen. Es ist zu sehen, daß die Spaltweite zur Zeit t₁ noch konstant über die Maschinenbreite verlief, während sich bereits zur Zeit t₂ eine kleine Verformung des Auslaufspaltes zeigt, die zur Zeit t₃ weiter verstärkt wird. Im Diagramm ist weiterhin ein Maximum sₘₐₓ der Veränderung der Spaltweite dargestellt. In der Figur 2b ist die Geschwindigkeit der Veränderung der Spaltweite in diesem Punkt sₘₐₓ aus der Figur 2a aufgetragen. Die Änderungsgeschwindigkeit der Spaltweite errechnet sich mit ΔFG/Δt. Es besteht auch die Möglichkeit an Stelle einer absoluten Änderungsgeschwindigkeit zur Beurteilung der Situation im Stoffauflauf eine relative Flächengewichtsänderung zu verwenden. Dies kann beispielsweise eine Flächengewichtsänderung an einer bestimmten Stelle im Verhältnis zum Mittelwert des maschinenbreiten Flächengewichts oder die Veränderung des Flächengewichts im Verhältnis zu einem vorgegeben Sollwert darstellen.

Die in dieser Figur 2 dargestellte Veränderung des Spaltes über die gesamte Maschinenbreite mit einer Wellenlänge von λ = 2 · Maschinenbreite ist nicht die einzige Möglichkeit der Spaltverformung eines Stoffauflaufes aufgrund von Temperaturschwankungen. Es ist auch möglich, daß sich der Spalt des Stoffauflaufes zum Beispiel entsprechend den konstruktiven Verstärkungen in der Stoffauflaufdüse mit kleineren Wellenlängen verändert. Auf jeden Fall werden diese Veränderungen des Stoffauflaufspaltes immer charakteristisch für den jeweiligen Stoffauflauf sein und einem bestimmten Muster entsprechen.

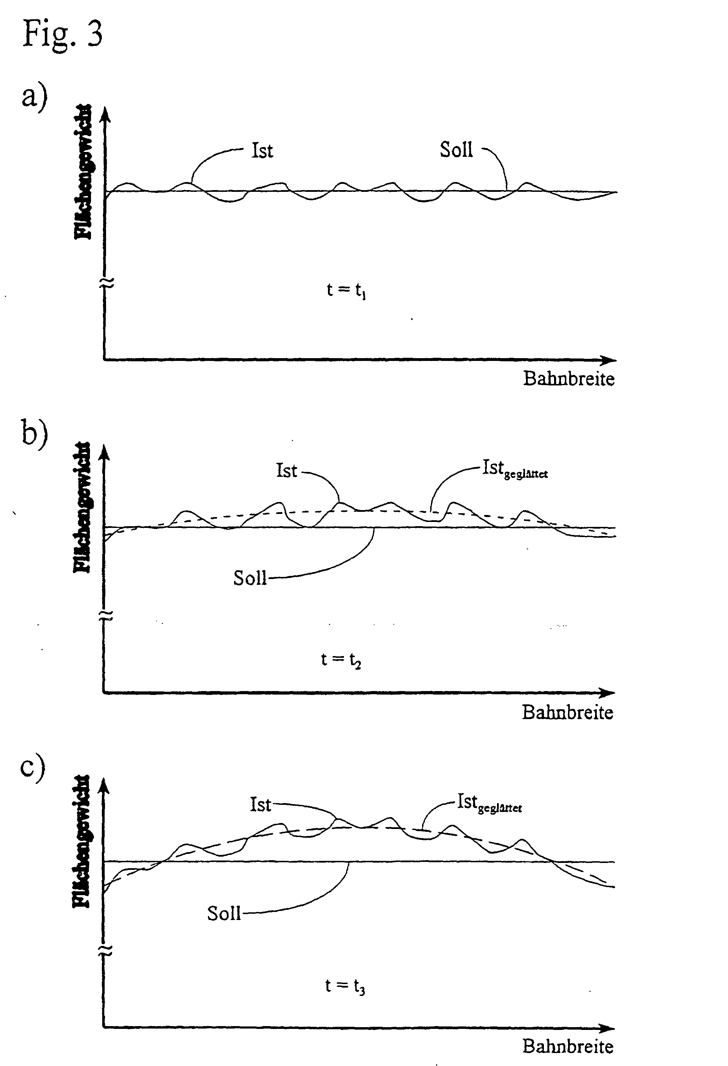

Die Figur 3 zeigt in den Unterfiguren a, b und c die jeweiligen Flächengewichts-Querprofile zu den Zeiten t₁, t₂ und t₃. Ein Vergleich der Figuren 2a und 3a bis 3c zeigt, daß die Flächengewichtsänderung charakteristisch mit einer Spaltweitenänderung oder genauer mit der Änderung des Spaltweitenprofils einhergeht. An den Stellen, an denen der Spalt vergrößert wird, findet auch aufgrund des reduzierten Widerstandes in diesem Bereich und des damit erhöhten Volumenstroms eine Erhöhung des Flächengewichts statt.

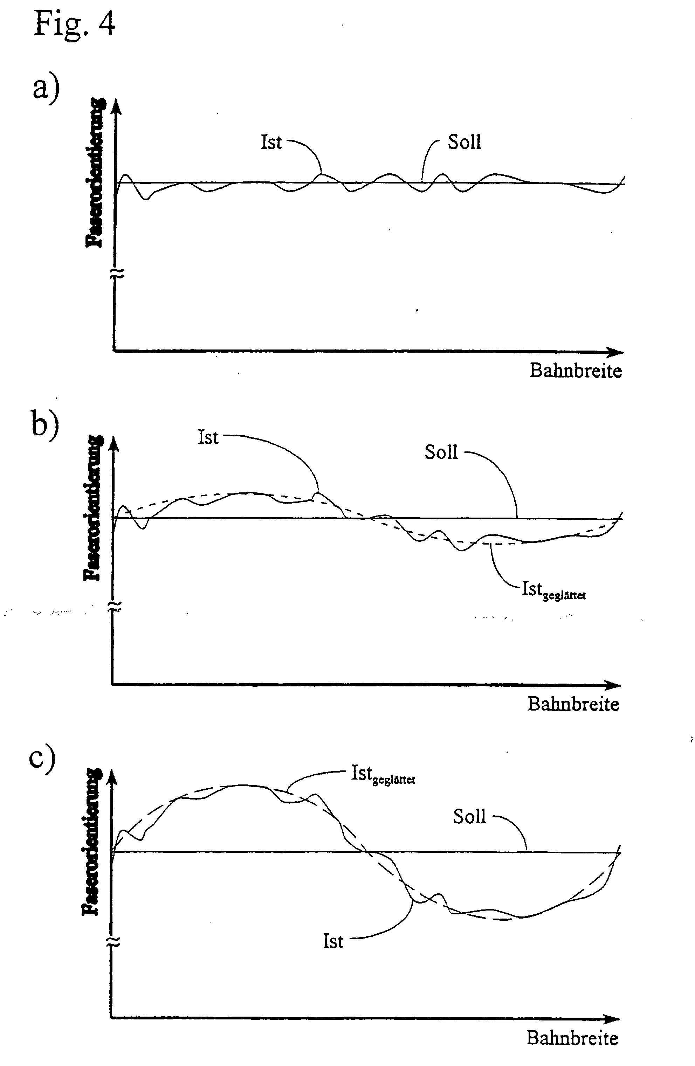

In der Figur 4 sind in den Teilen a, b und c die entsprechenden Faserorientierungs-Querprofile zu den Zeiten t₁, t₂ und t₃ dargestellt. Auch hier zeigt sich, daß die Faserorientierung mit der Veränderung der Spaltweite - entsprechend der Figur 2a - in ihrem Profil gestört wird. Die Ursache für die Veränderung des Faserorientierungs-Querprofils liegt darin, daß aufgrund des veränderten Auslaufspaltes im Stoffauflauf Querströmungen erzeugt werden, die in Richtung des größer werdenden Spaltes ausgerichtet sind. Das oben beschriebene Zusammenwirken zeigt also, daß durch die Beobachtung der Kontur der Veränderung des Flächengewichts-Querprofils auf eine entsprechende Änderung des Faserorientierungs-Querprofils geschlossen werden kann.

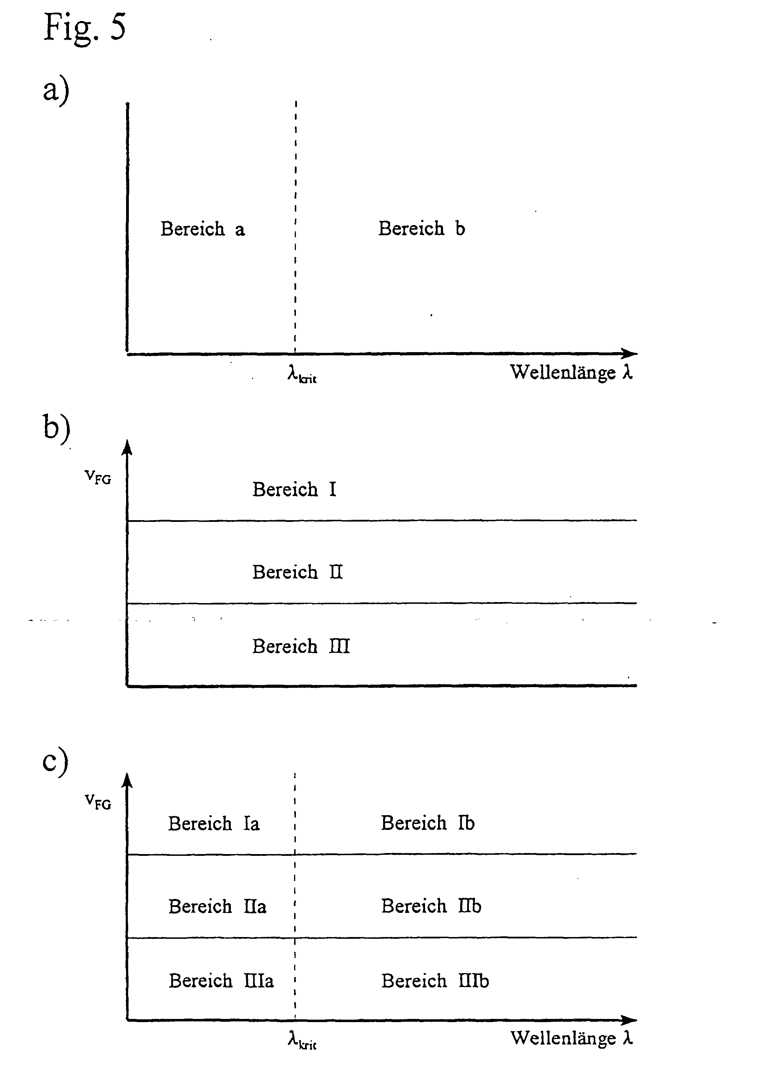

In der Figur 5a ist ein Auswahlkriterium dargestellt, aus welchem man auf eine Änderung des Faserorientierungs-Querprofils schließen kann. Ist die Wellenlänge λ des Flächengewichts-Querprofils größer als eine bestimmte kritische Wellenlänge λₖᵣᵢₜ, so kann auf eine Veränderung des Auslaufspaltes geschlossen werden und damit auf eine entsprechende und damit einhergehende Veränderung des Faserorientierungs-Querprofils.

Die Berechnung der Wellenlängen des Flächengewichts-Querprofils kann beispielsweise durch eine Fourier-Analyse durchgeführt werden oder auch durch bekannte Mustererkennungsverfahren oder ähnliche bekannte Verfahren der angewandten Mathematik erfolgen.

In der Figur 2b wurde der zeitliche Verlauf der Änderung des Flächengewichtes einer laufenden Papierbahn dargestellt. Diese Figur zeigt eine Flächengewichtsänderung, die mit ihrem zeitlichen Verlauf - also ihrer Geschwindigkeit - in einem Bereich liegt, der auf eine temperaturbedingte Verformung des Stoffauflaufes und damit der Stoffauflaufdüse, beziehungsweise des Stoffauflaufauslaufspaltes, schließen läßt. In dem in der Figur 2b dargestellten Verlauf des Flächengewichtes sind die höherfrequenten Anteile der Flächengewichtsänderungen, die zum Beispiel aus dem konstanten Teil der Papiermaschine herrühren können, nicht dargestellt. Diese können bei einem entsprechenden Meßverfahren, zum Beispiel durch ein geeignetes Filter, herausgefiltert werden.

Betrachtet man die Änderungsgeschwindigkeit V_{FG} des Flächengewichts, so zeigt sich, daß auch dieses Kriterium zur Erkennung einer Faserorientierungs-Querprofil-Änderung herangezogen werden kann. Ändert sich nämlich das Flächengewicht mit einer relativen hohen Frequenz, beziehungsweise hoher Geschwindigkeit, so kann dies nicht aus einer temperaturbedingten Verformung des Stoffauflaufes herrühren und wird daher auch nicht mit Schwankungen im Faserorientierungs-Querprofil einhergehen. Ebenfalls können Flächengewichtsänderungen mit einer sehr geringen Geschwindigkeit auftreten, die im wesentlichen durch Verschleißerscheinungen im Betrieb der Papiermaschine begründet sind und mit Änderungen des Faserorientierungs-Querprofils einhergehen. Finden jedoch Flächengewichtsänderungen in einem mittleren Bereich, der auch immer abhängig vom jeweiligen Stoffauflauf zu bestimmen ist, statt, so kann von einer temperaturbedingten Verformung des Stoffauflaufes beziehungsweise der Stoffauflaufdüse ausgegangen werden, wodurch auf eine damit einhergehende Beeinflussung des Faserorientierungs-Querprofils geschlossen werden kann. Dieses Auswahlkriterium der Veränderungsgeschwindigkeit ist in der Figur 5b dargestellt. Hier sind in einem Diagramm die Bereiche I, II und III der Änderungsgeschwindigkeit des Flächengewichts aufgetragen. Die Bereiche I und III sind bezüglich des Faserorientierungs-Querprofils unkritische Bereiche, während bei Veränderung des Flächengewichts mit einer Geschwindigkeit im Bereich II von einer damit einhergehenden Beeinflussung des Faserorientierungs-Querprofils ausgegangen werden kann.

Die größte Sicherheit bei der Erkennung der Änderung eines Faserorientierungs-Querprofils läßt sich dadurch gewinnen, daß die beiden zuvor genannten Methoden miteinander kombiniert werden. In der Figur 5c ist eine entsprechende schematische Darstellung dieser Kombination aufgetragen. Es ist eine Verknüpfung der Kriterien aus der Figur 5a und 5b gezeigt, wodurch sich die Bereiche der Änderungsgeschwindigkeit des Flächengewichts-Querprofils I, II und III in die Bereiche a und b unterteilen. Da im Falle einer Veränderung des Stoffauflaufspaltes, aufgrund von thermischen Einflüssen auf den Stoffauflauf, sowohl das Zeitverhalten als auch die charakteristische Form, als die charakteristische Wellenlänge der Spaltveränderung, gegeben sein muß, ist lediglich der Bereich IIb als Kriterium für eine vorhandene Beeinflussung des Faserorientierungs-Querprofils anzusehen.

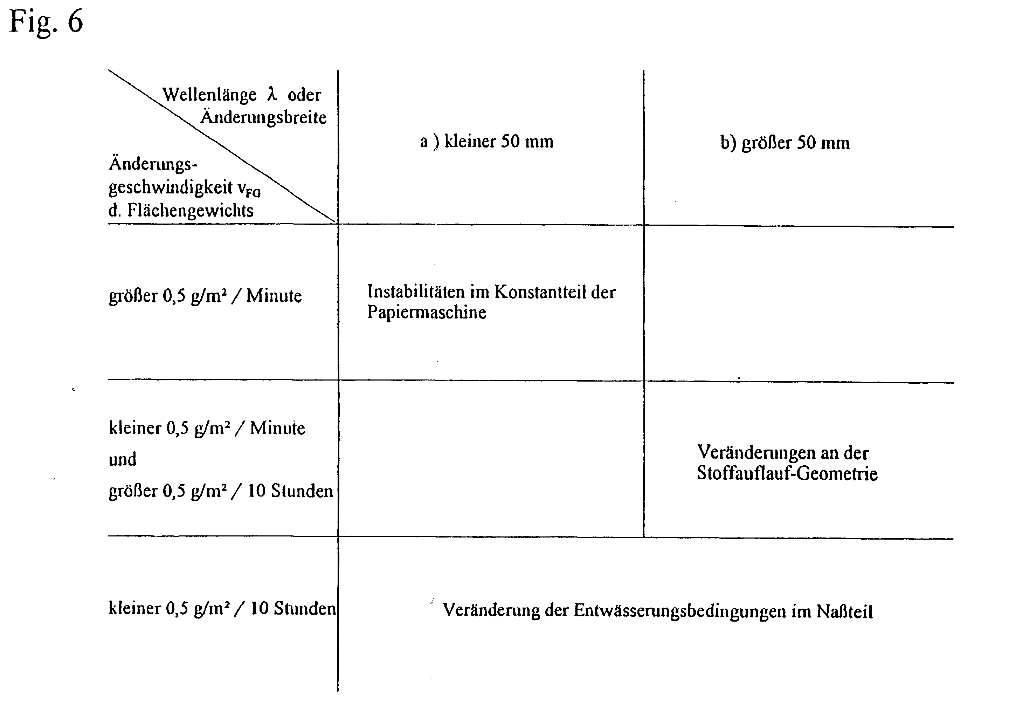

In der Figur 6 sind tabellarisch charakteristische, beziehungsweise bevorzugte Werteraster dargestellt. In der Tabelle ist auf der oberen waagrechten Zeile der entsprechende Wellenlängenbereich und auf der linken senkrechten Zeile die Bereiche der Änderungsgeschwindigkeiten aufgetragen. In den Kreuzungspunkten der Wertebereiche befinden sich die in Figur 5c dargestellten Bereiche Ia bis IIIb. In den entsprechenden Kästchen sind die Ursachen eingetragen, die zu einer charakteristischen Änderungsgeschwindigkeit beziehungsweise einer charakteristischen Wellenlänge der Änderung führen.

Zur Verdeutlichung des obengesagten, werden noch einmal die Bereiche der Figur 6 beschrieben.

### Bereich Ia:

Das Flächengewicht ändert sich hier sehr schnell mit Flächengewichts- Änderungsgeschwindigkeiten > 0,5 g/m² pro Minute innerhalb einer schmalen Zone des Flächengewichts-Querprofils von λ < 50 mm. Dies weist auf Schwankungen der Stoffdichte oder hydraulische Instabilitäten des Stoffzufuhrsystems hin.

### Bereich Ib:

Hier liegt eine schnelle Änderung des Flächengewichts vor, bei einer Wellenlänge beziehungsweise Änderungsbreite von λ > 50 mm. Die Ursache hierfür kann in großen Schwankungen der Stoffdichte und des Volumenstromes im Zufuhrsystem liegen.

Die Bereiche Ia und Ib geben keinen Hinweis auf eine Änderung des Faserorientierungs-Querprofils, da die Ursache für die Flächengewichtsänderung nicht in einer geänderten Stoffauflaufgeometrie liegt.

### Bereich IIa:

Dieser Bereich der Anderungsgeschwindigkeit gibt unter anderem den Hinweis darauf, daß die Stoffauflaufgeometrie und insbesondere die Düsengeometrie, das heißt also auch die Öffnung des Düsenauslaufspaltes, die Ursache für eine Flächengewichtsänderung ist. Da allerdings die Änderungsbreite beziehungsweise die Wellenlänge λ < λₖᵣᵢₜ ist davon auszugehen, daß die Verformung des Stoffauflaufes nicht die Ursache der Flächengewichtsänderung sein kann, da sich der Stoffauflauf nicht beliebig verformen kann.

Mögliche charakteristische Verformungen der Strömungskanäle quer zur Maschinenlaufrichtung hängen von der konstruktiven und statischen Gestaltung des Stoffauflaufes ab. Die Verformung wird zum Beispiel an Stellen mit Versteifungsrippen minimal sein, dazwischen jedoch ein Maximum annehmen, wenn sich zum Beispiel der Innendruck in der Düse bei veränderter Maschinengeschwindigkeit ändert. Die kritische Wellenlänge λₖᵣᵢₜ hängt also von der jeweiligen Stoffauflaufkonstruktion ab. In den bekannten Fällen liegt die kritische Wellenlänge λₖᵣᵢₜ > 50 mm.

Der Bereich IIa gibt also ebenfalls keinen Hinweis auf eine Änderung des Faserorientierungs-Querprofils.

### Bereich IIb:

Dieser Bereich wird durch Änderungsgeschwindigkeiten des Flächengewichts und durch Änderungsbreiten, beziehungsweise Wellenlängen der Flächengewichts-Änderungen, gekennzeichnet, die sich dadurch ergeben, daß die Stoffauflaufgeometrie in Querrichtung eine Änderung erfährt. Ergibt die Auswertung des "on line" gemessenen Flächengewichts-Querprofils Änderungsbreiten beziehungsweise Wellenlängen der Änderungen mit λ > λₖᵣᵢₜ und liegt die Änderungsgeschwindigkeit in dem vorgegebenen Bereich, so besteht ein eindeutiger Hinweis auf eine Verformung des Auslaufspaltes der Stoffauflaufdüse. Es besteht die Möglichkeit aus der Flächengewichts-Änderung ΔFG und aus der Übertragungsfunktion Δs = F(ΔFG) eine Spaltweitenänderung Δs zu errechnen. Hierbei wird davon ausgegangen, daß die Geometrieänderungen, zum Beispiel durch Druck, Temperatur oder ähnliches die örtliche Spaltweitenänderung Δs verursachen und diese zu der gemessenen Flächengewichtsänderung ΔFG und damit auch zu einer Änderung der Faserorientierung ΔFO geführt haben.

Der Bereich IIb gibt also einen eindeutigen Hinweis auf eine Änderung des Faserorientierungs-Querprofils. Es besteht damit die Möglichkeit, einen entsprechenden Korrektureingriff vorzunehmen. Dies kann bei einer sektional verstellbaren Blende an der Stoffauflaufdüse so erfolgen, daß das Flächengewicht-Querprofil durch eine Verstellung der Blende wieder auf den Ursprungswert rückkorrigiert wird oder es kann auch bei einem sektional volumenstromgeregelten Stoffauflauf durch eine Änderung der sektionalen Volumenströme und einer gleichzeitigen Anpassung des Stoffdichteprofils erfolgen.

### Bereich IIIa und IIIb:

Diese Bereiche zeichnen sich durch eine sehr langsame Änderungsgeschwindigkeit des Flächengewichts aus. Diese sehr langsamen Änderungen des Flächengewichts-Querprofils weisen auf eine Veränderung der Querprofile der Siebdurchläßigkeiten, zum Beispiel durch Siebverschleiß oder veränderte Entwässerungsgeschwindigkeiten beziehungsweise auf eine geänderte Retention im Formerbereich, hin.

Diese Bereiche ergeben also keinen Hinweis auf eine veränderte Faserorientierung.

Veränderungen des Flächengewichts, die in den Bereichen Ia, Ib, IIa, IIIa und IIIb liegen, werden also nur durch eine Anpassung des Stoffdichte-Querprofils korrigiert, so daß hierdurch keine zusätzlichen oder neuen Querströmungen in der Stoffauflaufdüse entstehen können.

Die oben gemachten Ausführungen zeigen, daß durch eine entsprechende Betrachtung der Flächengewichtsprofile sowohl in Längsrichtung, als auch in Querrichtung eine gute bis eindeutige Indikation bezüglich einer Faserorientierungsänderung möglich ist. Es besteht damit einerseits die Möglichkeit, dem Papiermacher das Vorliegen einer Änderung des Faserorientierungs-Querprofils anzuzeigen, um ihm gezielt die Möglichkeit zu einem Regeleingriff zu geben. Es ist allerdings auch möglich, in einem entsprechenden Regelkreis, aufgrund der Kenntnis des Vorliegens oder Nichtvorliegens einer Faserorientierungsänderung, die Regeleingriffe so zu steuern, daß bei einer vorliegenden Faserorientierung nur Regeleingriffe vorgenommen werden, die mit einer Rückführung der Faserorientierungsänderung einhergehen oder bei einer nicht vorliegenden Faserorientierungsänderung Regeleingriff e durchzuführen, die ausschließlich das Flächengewichtsprofil verändern oder zu korrigieren, ohne das Faserorientierungs-Querprofil zu beeinflussen.

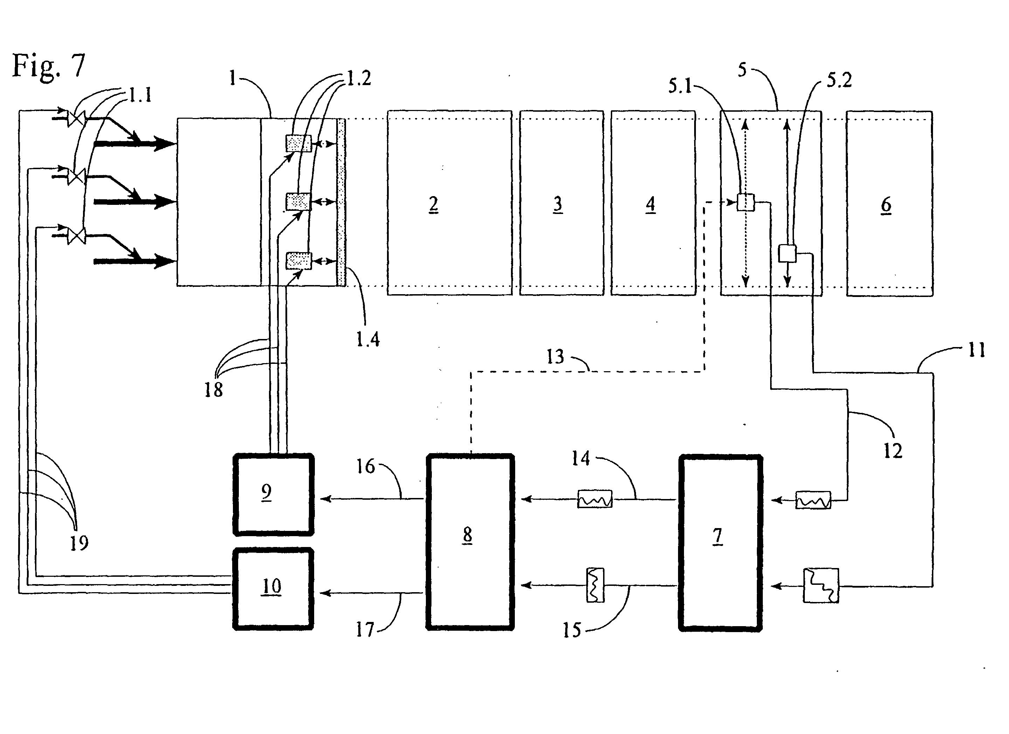

Mögliche Ausgestaltungen von erfindungsgemäßen Regelverfahren beziehungsweise Regelvorrichtungen bezüglich des Faserorientierungs- und Flächengewichts-Querprofils sind in den Figuren 7 bis 10 dargestellt. Aus Gründen der Übersichtlichkeit sind in den folgenden Figuren jeweils nur drei Stellglieder über die Maschinenbreite verteilt gezeigt. Dies entspricht nicht der realen Situation an einer Papiermaschine, da hier die Anzahl der Stellglieder wesentlich höher ist. Zur Verdeutlichung des Prinzips erscheint es jedoch ausreichend, nur drei Stellglieder in den nachfolgenden schematischen Darstellungen zu zeigen.

In der Figur 7 ist eine schematische Darstellung einer Papiermaschine mit dem Regelkreis zur Flächengewichtsund Faserorientierungs-Querprofil-Steuerung gezeigt. Die Papiermaschine besteht aus dem Stoffauflauf 1, dem nachfolgenden Former 2, deren Pressenpartie 3 und der Trockenpartie 4, sowie einer Aufwickelvorrichtung 6. Zwischen der Trockenpartie 4 und der Aufwickelvorrichtung 6 ist ein Meßrahmen 5 dargestellt, der einerseits über einen meist feststehenden Sensor 5.1 und einen über die Maschinenbreite traversierenden Sensor 5.2 zur Messung des Flächengewichts verfügt. Der Sensor 5.1 mißt das Flächengewichts-Längsprofil entlang einer bestimmten Maschinenbreite. Der Sensor 5.2 zeichnet ein Flächengewichtsprofil auf, das einerseits Anteile des reinen Flächengewichts-Querprofils als auch Anteile des Flächengewichts-Längsprofils enthält. Diese beiden Profile werden über die Meßleitungen 11 und 12 an eine Recheneinheit 7 übermittelt, die aus den beiden gemessenen Profilen die reinen Längs- und Querprofile errechnet.

Dieses Verfahren zur Profilberechnung ist beispielsweise aus der DE 20 19 975 und aus der DE 196 34 997 der Anmelderin bekannt. Der Offenbarungsgehalt beider Patentanmeldungen wird vollumfänglich in den Offenbarungsgehalt dieser Patentanmeldung miteinbezogen.

Nach der Ermittlung der getrennten Flächengewichts-Längs- und -Querprofile werden diese über die Leitungen 14 und 15 an die Recheneinheit 8 weitergegeben. In der Recheneinheit 8 werden die beiden Profile - gemäß der oben geschilderten Verfahren - analysiert und entschieden, ob eventuell bestehende Veränderungen in Flächengewichts-Querprofil oder vorhandene Änderungen des Flächengewichts im Flächengewichts-Längsprofil auf eine Änderung des Faserorientierungs-Querprofils hinweisen.

Wird eine Veränderung des Flächengewichts-QuerprofilS festgestellt und aufgrund der Charakteristik der Veränderung aufgrund seines zeitlichen und/oder örtlichen Verhaltens festgestellt, daß es sich um eine Veränderung des Flächengewichts-Querprofils mit einer gleichzeitig einhergehenden Änderung des Faserorientierungs-Querprofils handelt, so wird über die Leitung 16 die Steuereinheit 9, welche die Stellglieder 1.2 der Blende 1.4 des Stoffauflaufes verändert, angewiesen, eine Wiederherstellung des Flächengewichts-Querprofils vorzunehmen. Dies gilt zumindest soweit es sich um Korrekturen mit Breiten/Wellenlängen über der kritischen Wellenlänge handelt. Korrekturen kleinerer Wellenlängen - also im Bereich IIa aus der Figur 5c beziehungsweise der Tabelle der Figur 6 - werden mit Hilfe der sektionalen Stoffdichteregelung durchgeführt.

Wird erkannt, daß die Änderung des Flächengewichts-Querprofils keine gleichzeitige Veränderung des Faserorientierungs-Querprofils bewirkt hat, so wird über die Leitung 17 die Steuereinheit 10 angewiesen, das Flächengewichts-Querprofil über eine Regelung des Stoffdichte-Querprofils mit Hilfe der Stellglieder 1.1 einzuleiten.

Eine Verbesserung der dargestellten Vorrichtung kann dadurch erreicht werden, daß der erste Sensor 5.1, der während der Messung des Längsprofils ortsfest installiert ist, über eine Vorrichtung verfügt, die eine gezielte Positionierung des Sensors entlang der Maschinenbreite ermöglicht. Auf diese Weise besteht die Möglichkeit, bei einer Erkennung einer Flächengewichtsänderung mit einer Anderungsbreite die über der kritischen Änderungsbreite beziehungsweise über der kritischen Wellenlänge λₖᵣᵢₜ liegt, den Sensor 5.1 sofort an die Stelle dieses Maximums zu bewegen und die Änderung des Längsprofils an genau dieser Stelle vorzunehmen.

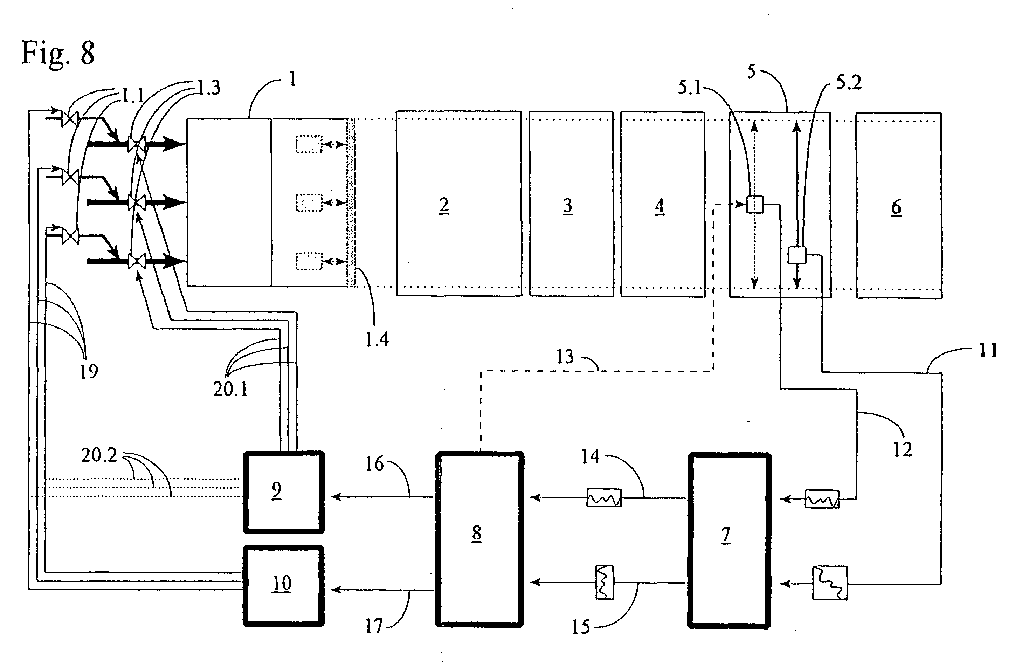

Die Figur 8 zeigt eine andere Ausführung einer Papiermaschine mit einem erfindungsgemäßen Regelkreis und einem Stoffauflauf 1, dessen Blende 1.4 nicht in den Regelkreis einbezogen ist. Die Funktionsweise dieses Regelkreises entspricht im Grundsatz der unter der Figur 7 beschriebenen Funktionsweise, jedoch wird an Stelle einer Änderung des Blendenspaltes, bei einer eventuell vorliegenden Veränderung des Faserorientierungs-Querprofils, eine Veränderung der sektionalen Volumenströme über die Stellglieder 1.3 im Stoffauflauf 1 vorgenommen. Bei den Stellgliedern 1.3 handelt es sich ebenso wie bei den Stellgliedern 1.1 um Drosselvorrichtungen. Das entsprechende Regelverfahren zur Korrektur der Faserorientierung mit Hilfe von Volumenstromänderungen ist beispielsweise in der zuvor genannten Patentanmeldung DE 42 39 845 der Anmelderin ausführlich beschrieben. Der Inhalt dieser obengenannten Anmeldung wird vollumfänglich in den Offenbarungsgehalt der vorliegenden Anmeldung übernommen.

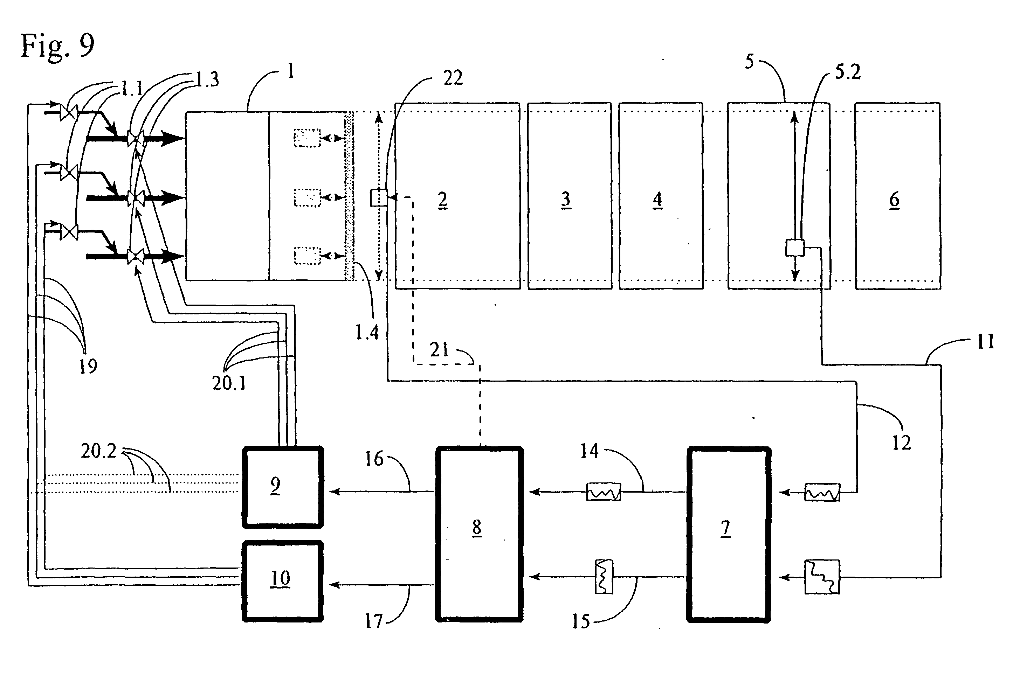

Eine weitere Ausführungsform einer erfindungsgemäßen Regelvorrichtung ist in der Figur 9 dargestellt. Der wesentliche Unterschied dieser Ausführungsform zur Figur 8 besteht darin, daß der erste Sensor 22 zur Messung eines Flächengewichts-Längsprofils nicht im Anschluß an die Trockenpartie 4 stationiert ist, sondern direkt am Ausgang der Stoffauflaufdüse angebracht ist. Somit mißt der Sensor 22 nicht das Flächengewicht selbst, sondern die aus dem Stoffauflauf austretende Masse an Stoffsuspension beziehungsweise an Feststoffgehalt in der Stoffsuspension, oder auch lediglich die Dicke des Stoffstrahles, oder auch die Dicke des Stoffstrahles und die örtliche Strahlgeschwindigkeit. Mit Hilfe dieser gemessenen Parameter, die über die Leitung 21 an die Recheneinheit 8 übertragen wird und die wesentlich direkter mit der geometrischen Situation des Auslaufspaltes der Stoffauflaufdüse verbunden ist, kann eine noch bessere Detektion einer Veränderung der Geometrie des Stoffauflaufes und damit einer Faserorientierungs-Querprofil-Veränderung erreicht werden.

Für die Messung des reinen Flächengewichts-Querprofils kann es trotz dem weit vorne angebrachten Sensor 22 von Vorteil sein, neben dem traversierenden Sensor 5.2 einen weiteren feststehenden Sensor oder auch beweglichen Sensor 5.1 im Bereich des Meßrahmens 5 vorzusehen.

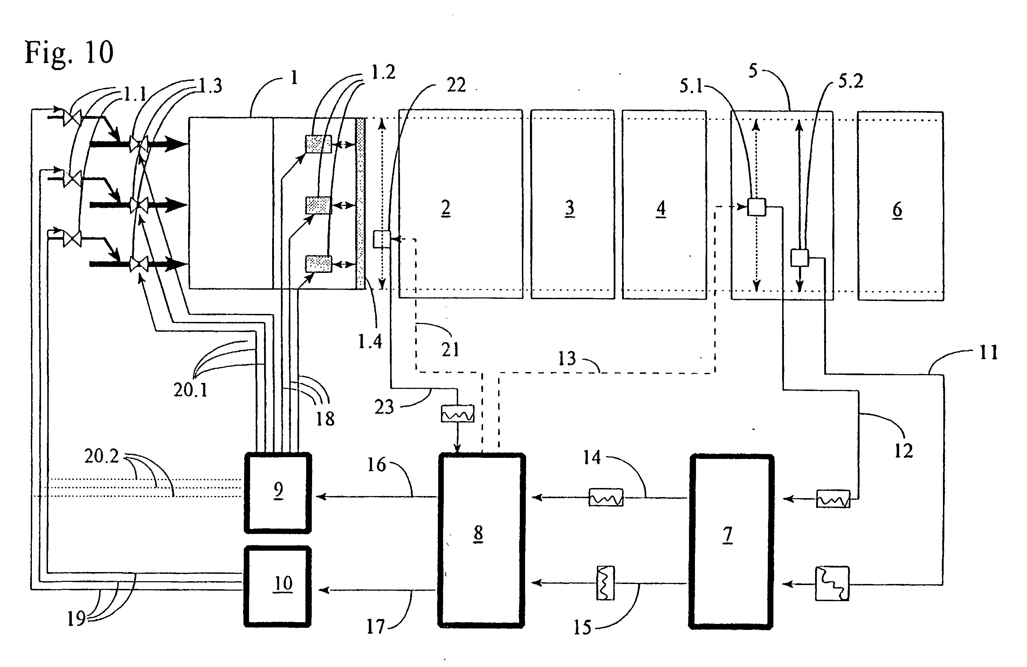

Eine weitere erfindungsgemäße Ausführungsform einer Papiermaschine, mit einer Regelvorrichtung für das Flächengewichts-Querprofil und dem Faserorientierungs-Querprofil, ist in der Figur 10 dargestellt. Der Aufbau der Papiermaschine entspricht im wesentlichen den zuvor beschriebenen Figuren 7 bis 9. Der wesentliche Unterschied bei dieser Ausführungform liegt darin, daß einerseits ein Sensor 22 direkt hinter den Stoffauflauf ein Längsprofil einer mit dem Flächengewicht korrelierenden Größe mißt und dieses Längsprofil über die Meßleitung 23 in die Recheneinheit 8 weitergibt. Die Recheneinheit 8 erhält die Information des korrigierten Flächengewichts-Längs- und -Querprofils über die Datenleitungen 14 und 15 aus der Recheneinheit 7. Von der Recheneinheit 8 wird über die Steuerleitung 21 die Positionierung des Sensors 22 und über die Steuerleitung 13 die Positionierung des Sensors 5.1 gesteuert, so daß die Sensoren sich jeweils in einem Maximum der Änderung des Flächengewichts-Querprofils befinden und somit eine optimale Auswertung der gemessenen Daten, bezüglich der Möglichkeit einer Faserorientierungs-Querprofil-Änderung, gegeben ist.

In der Recheneinheit 8 findet dann die Entscheidung gemäß den oben beschriebenen Kriterien statt, ob eine Veränderung des Faserorientierungs-Querprofils vorliegt. Entsprechend werden über die Datenleitungen 16 oder 17 die Befehle zur Korrektur des Flächengewichts-Querprofils, entweder an die Recheneinheit 9 oder die Recheneinheit 10, weitergegeben. Die Recheneinheit 10 ist ebenso wie in den zuvor beschriebenen Vorrichtungen der Figuren 7 bis 9 für die Korrektur des Stoffdichte-Querprofils im Stoffauflauf zuständig und korrigiert über die Stellglieder 1.1 das Flächengewicht der Papierbahn, ohne eine Änderung des Faserorientierungs-Querprofils herbeizuführen.

Die Recheneinheit 9 ist für die Korrektur des Flächengewichts-Querprofils mit gleichzeitiger Korrektur des Faserorientierungs-Querprofils zuständig. Es können hier entweder über die Steuerleitungen 20.1 Korrekturen an den Stellgliedern 1.3 durchgeführt werden, um das Faserorientierungs-Querprofil kombiniert mit dem Flächengewichts-Querprofil zu verändern. Andererseits kann auch die Blende zur Einstellung des Flächengewichts-Querprofils mit einer kombinierten Verstellung des Faserorientierungs-Querprofils, über die Datenleitungen 18 und die Stellglieder 1.2 der Blende 1.4, durchgeführt werden.

Die Kombination der Verstellmöglichkeiten durch die Recheneinheit 9, sowohl über beide Steuerleitungen 20.1 und 20.2 für die Stellglieder 1.1 und 1.3 und zusätzlich über die Stellglieder 1.2 der Blende 1.4 ermöglicht es, einerseits einen wesentlich größeren Einstellbereich zu verwirklichen und andererseits auch über eine aufeinander abgestimmte Verstellung der Stellglieder 1.1 und 1.3 das Faserorientierungs-Querprofil zu korrigieren, ohne daß das Flächengewichts-Querprofil beeinflußt wird. Hierzu wird in der gewünschten Sektion des Stoffauflaufes der sektionale Volumenstrom durch eine Verstellung des entsprechenden Stellgliedes 1.3 verändert und gleichzeitig über das Stellglied 1.1 die Konzentration dieses sektionalen Volumenstromes so verändert, daß die Summe der Feststoffe, die durch diese Sektion fließt, trotz Änderung des Volumenstroms der Stoffsuspension konstant bleibt.

Es ist selbstverständlich, daß die in den Figuren 7 bis 10 dargestellten Recheneinheiten 7, 8, 9 und 10 in der Praxis einzelne, physisch getrennte Rechen- und Steuereinheiten sein können, jedoch entspricht es ebenfalls dem Erfindungsgedanken, wenn diese Recheneinheiten 7 bis 10 in einem einzigen Prozeßleitsystem aufgehen, das in der Regel programmgesteuert die einzelnen Auswerte, Entscheidungs- und Steuervorgänge vornimmt. Auch andere Kombinationen von Hardware und Software, beziehungsweise Rechen-, Auswerte- und Steuereinheiten, sind möglich ohne den Rahmen der Erfindung zu verlassen.

Ebenso ist es möglich, den Sensor 22 an anderen Stellen der Papiermaschine, gemäß den entsprechenden Unteransprüchen, anzubringen.

Mit den oben dargestellten Ausführungsformen ist es gegenüber dem Stand der Technik nun möglich durch eine "on line"-Messung des Flächengewichts-Querprofils und/oder Flächengewichts-Längsprofils oder mit diesen Profilen einhergehenden anderen Meßgrößen durch ein "on line"-Verfahren auf eine Veränderung des Faserorientierungs-Querprofils zu schließen und weiterhin diese Information in ein "on line"-Regelsystem einfließen zu lassen, um jeweils die richtigen Produktionsparameter am Stoffauflauf zu verstellen. Diese oben beschriebenen Verfahren liefern wesentlich bessere Ergebnisse bei der Regelung des Stoffauflaufes, bei der Herstellung einer Papier- oder Kartonbahn und führen damit zu einer insgesamt wesentlich verbesserten Papierqualität.

### Bezugszeichenliste

- 1: Stoffauflauf
- 1.1,1.3: Stellglieder/Drosselvorrichtungen in der Stoffsuspensionszufuhr
- 1.2: Stellglieder an der Blende
- 1.4: Blende
- 2: Former
- 3: Pressenpartie
- 4: Trockenpartie
- 5: Meßrahmen
- 5.1,5.2: Sensoren
- 6: Aufwickelvorrichtung
- 7,8: Recheneinheit
- 9,10: Steuereinheit
- 11,12: Meßleitungen
- 13: Steuerleitung
- 14,15,16,17: Datenleitungen
- 18,19,20.1,20.2,21: Steuerleitungen
- 22: Sensor
- 23: Meßleitung

## Patentansprüche

1. Verfahren zur Erkennung einer Änderung des Faserorientierungs-Querprofils einer Papier-oder Kartonbahn im Herstellungsprozeß auf einer Papier- oder Kartonmaschine, wobei über eine charakteristische Änderung des Flächengewichts-Querprofils beziehungsweise mindestens einer damit korrelierenden Meßgröße und/oder eine charakteristische Änderung des Flächengewichts in Laufrichtung der Bahn beziehungsweise mindestens einer damit korrelierenden Meßgröße auf eine Änderung des Faserorientierungs-Querprofils in der Bahn geschlossen wird.

2. Verfahren nach Anspruch 1, **gekennzeichnet durch** die folgenden Verfahrensschritte:
2.1 wiederholte Bestimmung des Flächengewichts-Querprofils der Papier-oder Kartonbahn;
2.2 Bestimmung der Änderung(en) des Flächengewichts-Querprofils;
2.3 Bestimmung der Wellenlängen λ der Änderung (en) des Flächengewichts-Querprofils;
2.4 Vergleich der Wellenlängen der Änderung(en) des Flächengewichts-Querprofils mit einem vorgegebenen Werteraster zur Entscheidung, ob die jeweilige Änderung mit einer Änderung der Faserorientierung einhergehen kann.

3. Verfahren nach Anspruch 2, **dadurch gekennzeichnet, daß** bei einer Wellenlänge der Änderung des Flächengewichts-Querprofils größer als ein vorgegebener Wert λₖᵣᵢₜ eine Änderung des Faserorientierungs-Querprofils angenommen wird und bei kleineren Wellenlängen auf eine gleichbleibende Faserorientierung geschlossen wird.

4. Verfahren nach Anspruch 1, **gekennzeichnet durch** die folgenden Verfahrensschritte:
4.1 Bestimmung des zeitlichen Verlaufs des Flächengewichts der Papier-oder Kartonbahn an mindestens einer Position bezüglich der Maschinenbreite;
4.2 Bestimmung der zeitlichen Änderung(en) des Flächengewichts an der mindestens einen Position;
4.3 Bestimmung der Änderungsgeschwindigkeit ΔFG/Δt beziehungsweise relativen Änderungsgeschwindigkeit des Flächengewichts an dieser mindestens einen Position;
4.4 Vergleich der Änderungsgeschwindigkeit(en) mit einem vorgegebenen Werteraster zur Entscheidung, ob die jeweilige Änderungsgeschwindigkeit mit einer Änderung des Faserorientierungs-Querprofils einhergehen kann.

5. Verfahren nach Anspruch 4, **dadurch gekennzeichnet, daß** bei einer
Änderungsgeschwindigkeit des Flächengewichts (ΔFG/Δt) an einer Position größer als ein vorgegebener Wert (ΔFG/Δt)_{krit,min} und kleiner als ein vorgegebener Wert (ΔFG/Δt)_{krit,max} eine Änderung des Faserorientierungs-Querprofils angenommen wird.

6. Verfahren nach der Ansprüchen 2 und 4 **dadurch gekennzeichnet, daß** die Verfahrensschritte der Ansprüche 2 und 4 gemeinsam angewendet werden.

7. Verfahren nach der Ansprüchen 3, 5 und 6, **dadurch gekennzeichnet, daß** zur positiven Erkennung einer Änderung des Faserorientierungs-Querprofils sowohl die Kriterien des Anspruches 3 als auch des Anspruches 5 erfüllt sein müssen.

8. Verfahren nach einem der Ansprüche 3 oder 7,
**dadurch gekennzeichnet, daß** die kritische Wellenlänge λₖᵣᵢₜ ≤ 0, 5 Meter und/oder Bahnbreite/5, vorzugsweise Bahnbreite/2 beträgt.

9. Verfahren nach einem der Ansprüche 5 oder 7,
**dadurch gekennzeichnet, daß** der kritische Bereich der Änderungsgeschwindigkeit zwischen (ΔFG/Δt)_{krit,max} = 0,5 g/m² je Minute beziehungsweise 0,5 % je Minute und (ΔFG/Δt)_{krit,min} = 0,5 g/m² je 10 Stunden beziehungsweise 0,5 % je 10 Stunden liegt.

10. Verfahren nach Anspruch 1 , **dadurch gekennzeichnet, daß**
10.1 mit Hilfe mindestens zweier Sensoren (5.1, 5.2, 22) das Flächengewichts-Querprofil und das Flächengewichts-Längsprofil der Papierbahn gemessen wird,
10.2 aus der relevanten Wellenlänge der Änderung des Flächengewichts-Querprofils auf eine mögliche Verformung des Stoffauflaufes (1) geschlossen wird,
10.3 zur Verifizierung der Verlauf des Flächengewichts-Längsprofils an der Position des mindestens einen Maximums der Änderung des Flächengewichts-Querprofils bestimmt wird und
10.4 aus dem charakteristischen zeitlichen Verlauf des Flächengewichts beziehungsweise aus der Änderungsgeschwindigkeit auf eine mögliche Verformung des Stoffauflaufes (1) und damit eine Beeinflussung des Faserorientierungs-Querprofils geschlossen wird.

11. Verfahren nach einem der Ansprüche 1 - 10, **dadurch gekennzeichnet, daß** die Änderung des Flächengewichts indirekt über die Änderung des Spaltweitenprofils der Blende (1.4) am Auslaufspalt der Stoffauflaufdüse bestimmt wird.

12. Verfahren nach einem der Ansprüche 1 - 10, **dadurch gekennzeichnet, daß** die Änderung des Flächengewichts indirekt über die Änderung der Stellglieder (1.2) der Spaltweite der Blende (1.4) am Auslaufspalt der Stoffauflaufdüse bestimmt wird.

13. Verfahren nach einem der Ansprüche 1 - 10, **dadurch gekennzeichnet, daß** die Änderung des Flächengewichts indirekt über die Änderung des Durchsatzes an Feststoff in den Sektionen des Stoffauflaufes (1) bestimmt wird.

14. Verfahren nach einem der Ansprüche 1 - 10, **dadurch gekennzeichnet, daß** die Änderung des Flächengewichts indirekt über die Änderung der Stellglieder zur Einstellung des Durchsatzes an Feststoff in den Sektionen des Stoffauflaufes (1) bestimmt wird.

15. Verfahren zur Korrektur einer Änderung des Faserorientierungs-Querprofils an mindestens einer Position einer laufenden Papier-oder Kartonbahn im Herstellungsprozeß auf einer Papier-oder Kartonmaschine, **dadurch gekennzeichnet, daß** zur Erkennung der Änderung des Faserorientierungs-Querprofils ein Verfahren gemäß einem der Ansprüche 1 - 14 verwendet wird und anschließend der Änderung des Faserorientierungs-Querprofils durch eine Verstellung an der Blende (1.4) des Stoffauflaufes (1) der Maschine gegengesteuert wird.

16. Verfahren zur Korrektur einer Änderung des Faserorientierungs-Querprofils an mindestens einer Position einer laufenden Papier-oder Kartonbahn im Herstellungsprozeß auf einer Papier-oder Kartonmaschine, **dadurch gekennzeichnet, daß** zur Erkennung der Änderung des Faserorientierungs-Querprofils ein Verfahren gemäß einem der Ansprüche 1 - 14 verwendet wird und anschließend der Änderung des Faserorientierungs-Querprofils durch eine Änderung des Stoffsuspensionsdurchsatzes in einer oder mehrerer Sektionen des Stoffauflaufes (1) der Maschine gegengesteuert wird.

17. Verfahren nach Anspruch 16, **dadurch gekennzeichnet, daß** in einzelnen Sektionen des Stoffauflaufes (1) Stoffsuspension zu- und/oder abgeführt wird.

18. Verfahren zur Korrektur einer Änderung des Flächengewichts-Querprofil und des Faserorientierungs-Querprofil an mindestens einer Position einer laufenden Papier-oder Kartonbahn, mit einem sektional stoffdichtegeregelten. im Herstellungsprozeß auf einer Papier-oder Kartonmaschine Stoffauflauf (1), welcher auch ein Mittel (1.2) zur sektionalen Beeinflussung des Auslaufspaltes aufweist, **dadurch gekennzeichnet, daß** bei einer notwendigen Korrektur des Flächengewichts-Querprofils zur Erkennung einer möglicherweise einhergehenden Änderung des Faserorientierungs-Querprofils ein Erkennungsverfahren gemäß einem der Ansprüche 1 - 14 verwendet wird und anschließend bei einer positiv erkannten Änderung des Faserorientierungs-Querprofils, eine Korrektur des Flächengewichts-Querprofils durch eine Verstellung am Auslaufspalt des Stoffauflaufes (1) vorgenommen wird, während bei einem Ausschluß einer Änderung des Faserorientierungs-Querprofils, die Korrektur des Flächengewichts-Querprofils durch Änderung des Stoffdichteprofils vorgenommen wird.

19. Verfahren zur Korrektur einer Änderung des Flächengewichts-Querprofil und des Faserorientierungs-Querprofil an mindestens einer Position einer laufenden Papier-oder Kartonbane im Herstellungsprozeß auf einer Papier-oder Kartonmaschine mit einem sektional stoffdichtegeregelten und sektional volumenstromgeregelten Stoffauflauf (1), **dadurch gekennzeichnet, daß** bei einer notwendigen Korrektur des Flächengewichts-Querprofils zur Erkennung einer möglicherweise einhergehenden Änderung des Faserorientierungs-Querprofils ein Erkennungsverfahren gemäß einem der Ansprüche 1 - 14 verwendet wird und anschließend bei einer positiv erkannten Änderung des Faserorientierungs-Querprofils, eine Korrektur des Flächengewichts-Querprofils durch eine Änderung der sektionalen Volumenströme im Stoffauflauf (1) vorgenommen wird, während bei einem Ausschluß einer Änderung des Faserorientierungs-Querprofils, die Korrektur des Flächengewichts-Querprofils durch Änderung des Stoffdichteprofils vorgenommen wird.

20. Papier-oder Kartonmaschine mit einer Vorrichtung zur Erkennung einer Änderung des Faserorientierungs-Querprofils einer Papier- oder Kartonbahn im Herstellungsprozess auf der Papier- oder Kartonmaschine
wobei die Vorrichtung die Folgenden Merkmale aufweist :
20.1 mindestens einen Sensor (5.1, 5.2, 22) mit einer Auswerteeinheit (7) zur Bestimmung des Flächengewichts-Querprofils der Papier- oder Kartonbahn oder eines Querprofils einer korrelierenden Meßgröße und/oder mindestens einen Sensor (5.1, 5.2, 22) mit einer Auswerteeinheit (7) zur Bestimmung des zeitlichen Verlaufs des Flächengewichts-Längsprofils der Papier- oder Kartonbahn an mindestens einer Position bezüglich der Maschinenbreite;
20.2 mindestens ein Mittel (8) zur Bestimmung der Änderung(en) des Querprofils des Flächengewichts beziehungsweise der korrelierenden Größe und zur Bestimmung der Wellenlängen λ der Änderung(en) und/oder mindestens ein Mittel (8) zur Bestimmung der Änderungsgeschwindigkeit ΔFG/Δt beziehungsweise der relativen Änderungsgeschwindigkeit des Flächengewichts an dieser mindestens einen Position bezüglich der Maschinenbreite;
20.3 mindestens ein Mittel (8) zum Vergleich der Wellenlängen des Querprofils der Änderungen und/oder der Änderungsgeschwindigkeit(en) mit einem vorgegebenen Werteraster zur Entscheidung, ob die jeweilige Änderung und/oder Änderungsgeschwindigkeit mit einer Änderung des Faserorientierungs-Querprofils einhergehen kann und
20.4 eine Ausgabeeinheit zur Anzeige der Änderung des Faserorientierungs-Querprofils.

21. Maschine nach Anspruch 20 **dadurch gekennzeichnet, daß** mindestens eines der genannten Mittel (18) eine Recheneinheit mit einem entsprechenden Auswerteprogramm beziehungsweise Auswerteunterprogramm aufweist.

22. Maschine nach Anspruch 20 oder 21, **dadurch gekennzeichnet, daß** die Sensoren (5.1, 5.2, 22) zur Ermittlung des Flächengewichts-Querprofils und des Flächengewichts-Längsprofils über Mittel zur gesteuerten Bewegung quer zur Maschinenrichtung verfügen.

23. Maschine nach einem der Ansprüche 20 - 22, **dadurch gekennzeichnet, daß** ein erster Sensor (5.2) quer zur Maschinenrichtung bewegt werden kann und ein zweiter Sensor (5.1, 22) ortsfest angebracht ist.

24. Maschine nach einem der Ansprüche 20 - 23, **dadurch gekennzeichnet, daß** mindestens einer der Sensoren (5.1,5.2) oder ein weiterer Sensor (22) im Bereich des Stoffsuspensionsstrahles vorgesehen ist.

25. Maschine nach einem der Ansprüche 20 - 24, **dadurch gekennzeichnet, daß** mindestens einer der Sensoren (5.1,5.2) oder ein weiterer Sensor (22) im Bereich des Formers (2) vorgesehen ist.

26. Maschine nach einem der Ansprüche 20 - 25, **dadurch gekennzeichnet, daß** mindestens einer der Sensoren (5.1,5.2) oder ein weiterer Sensor (22) im Bereich der Pressenpartie (3) vorgesehen ist.

27. Maschine nach einem der Ansprüche 20 - 26, **dadurch gekennzeichnet, daß** mindestens einer der Sensoren (5.1,5.2) oder ein weiterer Sensor (22) im Bereich der Trockenpartie (4) vorgesehen ist.

28. Maschine nach einem der Ansprüche 20 - 27, **dadurch gekennzeichnet, daß** mindestens einer der Sensoren (5.1,5.2) oder ein weiterer Sensor (22) im Bereich zwischen dem Former (2) und der Pressenpartie (3) vorgesehen ist.

29. Maschine nach einem der Ansprüche 20 - 28, **dadurch gekennzeichnet, daß** mindestens einer der Sensoren (5.1,5.2) oder ein weiterer Sensor (22) im Bereich zwischen der Pressenpartie (3) und der Trockenpartie (4) vorgesehen ist.

30. Maschine nach einem der Ansprüche 20 - 29, **dadurch gekennzeichnet, daß** mindestens einer der Sensoren zur Messung der Schichtdicke, beziehungsweise zur Messung der Absorption radioaktiver Strahlung oder des Lichtes oder von Ultraschall, beziehungsweise zur Messung der Strahldicke und/oder Strahlgeschwindigkeit geeignet ist.

## Claims

1. Method for the detection of a change in the cross-machine fibre orientation profile of a paper or board web in the production process on a papermaking or board machine, a conclusion being drawn about a change in the cross-machine fibre orientation profile in the web via a characteristic change in the cross-machine grammage profile or at least one measured variable that correlates therewith and/or a characteristic change in the grammage in the running direction of the web or at least one measured variable that correlates therewith.

2. Method according to Claim 1, **characterized by** the following method steps:
2.1 repeated determination of the cross-machine grammage profile of the paper or board web;
2.2 determination of the change(s) in the cross-machine grammage profile
2.3 determination of the wavelengths λ of the change(s) in the cross-machine grammage profile;
2.4 comparison of the wavelengths of the change(s) in the cross-machine grammage profile with a predefined value grid, in order to decide whether the respective change can be associated with a change in the fibre orientation.

3. Method according to Claim 2, **characterized in that** in the event of a wavelength of the change in the cross-machine grammage profile being greater than a predefined value λ_{crit}, a change in the cross-machine fibre orientation profile is assumed and, in the event of smaller wavelengths, a constant fibre orientation is concluded.

4. Method according to Claim 1, **characterized by** the following method steps:
4.1 determination of the variation over time of the grammage of the paper or board web at at least one position with respect to the machine width;
4.2 determination of the change(s) over time of the grammage at the at least one position;
4.3 determination of the rate of change ΔFG/Δt or relative rate of change of the grammage at this at least one position;
4.4 comparison of the rate(s) of change with a predefined value grid to decide whether the respective rate of change can be associated with a change in the cross-machine fibre orientation profile.

5. Method according to Claim 4, **characterized in that** in the event of a rate of change in the grammage (ΔFG/Δt) at a position greater than a predefined value (ΔFG/Δt)_{crit,min} and less than a predefined value (ΔFG/Δt)_{crit,max}, a change in the cross-machine fibre orientation profile is assumed.

6. Method according to Claims 2 and 4, **characterized in** the method steps of Claims 2 and 4 are applied together.

7. Method according to Claims 3, 5 and 6, **characterized in that** for the positive detection of a change in the cross-machine fibre orientation profile, both the criteria of Claim 3 and of Claim 5 must be satisfied.

8. Method according to either of Claims 3 and 7, **characterized in that** the critical wavelength λ_{crit} is ≤0.5 m and/or web width/5, preferably web width/2.

9. Method according to either of Claims 5 and 7, **characterized in that** the critical range of the rate of change lies between (ΔFG/Δt)_{crit,max} = 0.5 g/m² per minute or 0.5% per minute and (ΔFG/Δt)_{crit,min} = 0.5 g/m² per 10 hours or 0.5% per 10 hours.

10. Method according to Claim 1, **characterized in that**
10.1 with the aid of at least two sensors (5.1, 5.2, 22), the cross-machine grammage profile and the machine-direction grammage profile of the paper web are measured,
10.2 from the relevant wavelength of the change in the cross-machine grammage profile, a conclusion is drawn about possible deformation of the headbox (1 ),
10.3 for verification, the course of the machine-direction grammage profile at the position of the at least one maximum of the change in the cross-machine grammage profile is determined and
10.4 from the characteristic variation over time of the grammage or from the rate of change, a conclusion is drawn about possible deformation of the headbox (1) and therefore an influence on the cross-machine fibre orientation profile.

11. Method according to one of Claims 1 - 10, **characterized in that** the change in the grammage is determined indirectly via the change in the width profile of the slice (1.4) at the outlet gap of the headbox nozzle.

12. Method according to one of Claims 1 - 10, **characterized in that** the change in the grammage is determined indirectly via the change in the actuating elements (1.2) of the gap width of the slice (1.4) at the outlet gap of the headbox nozzle.

13. Method according to one of Claims 1 - 10, **characterized in** the change in the grammage is determined indirectly via the change in the throughput of solids in the sections of the headbox (1 ).

14. Method according to one of Claims 1 - 10, **characterized in** the change in the grammage is determined indirectly via the change in the actuating elements for setting the throughput of solids in the sections of the headbox (1 ).

15. Method for the correction of a change in the cross-machine fibre orientation profile at at least one position of a moving paper or board web in the production process on a papermaking or board machine, **characterized in that**, in order to detect the change in the cross-machine fibre orientation profile, a method according to one of Claims 1 - 14 is used and the change in the cross-machine fibre orientation profile is then counteracted under control by means of an adjustment to the slice (1.4) of the headbox (1) of the machine.

16. Method for the correction of a change in the cross-machine fibre orientation profile at at least one position of a moving paper or board web in the production process on a papermaking or board machine, **characterized in that**, in order to detect the change in the cross-machine fibre orientation profile, a method according to one of Claims 1 - 14 is used, and the change in the cross-machine fibre orientation profile is then counteracted under control by means of a change in the stock suspension throughput in one or more sections of the headbox (1) of the machine.

17. Method according to Claim 16, **characterized in that** stock suspension is added and/or subtracted in individual sections of the headbox (1).

18. Method for the correction of a change in the cross-machine grammage profile and the cross-machine fibre orientation profile at at least one position of a moving paper or board web in the production process on a papermaking or board machine, using a sectionally consistency-controlled headbox (1), which also has a means (1.2) for influencing the outlet gap section by section, **characterized in that**, in the event of a necessary correction of the cross-machine grammage profile, in order to detect a possibly associated change in the cross-machine fibre orientation profile, a detection method according to one of Claims 1 - 14 is used and then, in the event of a positively detected change in the cross-machine fibre orientation profile, a correction to the cross-machine grammage profile is performed by means of an adjustment to the outlet gap of the headbox (1 ), while, in the event that a change in the cross-machine fibre orientation profile is ruled out, the correction to the cross-machine grammage profile is performed by changing the consistency profile.

19. Method for the correction of a change in the cross-machine grammage profile and the cross-machine fibre orientation profile at at least one position of a moving paper or board web in the production process on a papermaking or board machine, having a sectionally consistency-controlled and sectionally volume-flow-controlled headbox (1), **characterized in that**, in the event of a necessary correction to the cross-machine grammage profile, in order to detect a possibly associated change in the cross-machine fibre orientation profile, a detection method according to one of Claims 1 - 14 is used and then, in the event of a positively detected change in the cross-machine fibre orientation profile, a correction to the cross-machine grammage profile is performed by means of a change to the sectional volume flows in the headbox (1) while, in the event that a change in the cross-machine fibre orientation profile is ruled out, the correction to the cross-machine grammage profile is performed by changing the consistency profile.

20. Papermaking or board machine having an apparatus for the detection of a change in the cross-machine fibre orientation profile of a paper or board web in the manufacturing process on the papermaking or board machine, the apparatus having the following features:
20.1 at least one sensor (5.1, 5.2, 22) having an evaluation unit (7) for determining the cross-machine grammage profile of the paper or board web or of a cross-machine profile of a correlated measured variable, and/or at least one sensor (5.1, 5.2, 22) having an evaluation unit (7) for determining the variation over time in the machine-direction grammage profile of the paper or board web at at least one position with respect to the machine width;
20.2 at least one means (8) for determining the change(s) in the cross-machine profile of the grammage or the correlated variable and for determining the wavelengths λ of the change(s) and/or at least one means (8) for determining the rate of change ΔFG/Δt or the relative rate of change in the grammage at this at least one position with respect to the machine width;
20.3 at least one means (8) for comparing the wavelengths of the cross-machine profile of the changes and/or the rate(s) of change with a predefined value grid, in order to decide whether the respective change and/or rate of change can be associated with a change in the cross-machine fibre orientation profile, and
20.4 an output unit for displaying the change in the cross-machine fibre orientation profile.

21. Machine according to Claim 20, **characterized in** the at least one of the aforementioned means (8) has a computing unit with an appropriate evaluation program or evaluation subroutine.

22. Machine according to Claim 20 or 21, **characterized in** the sensors (5.1, 5.2, 22) for determining the cross-machine grammage profile and the machine-direction grammage profile have means for controlled movement transversely with respect to the machine direction.

23. Machine according to one of Claims 20 - 22, **characterized in that** a first sensor (5.2) can be moved transversely with respect to the machine direction, and a second sensor (5.1, 22) is fitted in a fixed location.

24. Machine according to one of Claims 20 - 23, **characterized in that** at least one of the sensors (5.1, 5.2) or a further sensor (22) is provided in the area of the stock suspension jet.

25. Machine according to one of Claims 20 - 24, **characterized in that** at least one of the sensors (5.1, 5.2) or a further sensor (22) is provided in the area of the former (2).

26. Machine according to one of Claims 20 - 25, **characterized in that** at least one of the sensors (5.1, 5.2) or a further sensor (22) is provided in the area of the press section (3).

27. Machine according to one of Claims 20 - 26, **characterized in that** at least one of the sensors (5.1, 5.2) or a further sensor (22) is provided in the area of the drying section (4).

28. Machine according to one of Claims 20 - 27, **characterized in that** at least one of the sensors (5.1, 5.2) or a further sensor (22) is provided in the area between the former (2) and the press section (3).

29. Machine according to one of Claims 20 - 28, **characterized in that** at least one of the sensors (5.1, 5.2) or a further sensor (22) is provided in the area between the press section (3) and the drying section (4).

30. Machine according to one of Claims 20 - 29, **characterized in that** at least one of the sensors is suitable for measuring the layer thickness, or for measuring the absorption of radioactive radiation or light or ultrasound, or for measuring the jet thickness and/or jet speed.

## Revendications

1. Procédé pour la reconnaissance d'une modification du profil sens travers de l'orientation des fibres d'une feuille continue en papier ou carton lors du processus de fabrication sur une machine à papier ou carton, où moyennant une modification caractéristique du profil sens travers du grammage, ou respectivement au moins une grandeur de mesure en corrélation avec celle-ci et/ou une modification caractéristique du grammage dans le sens machine de la feuille continue, ou respectivement au moins une grandeur de mesure en corrélation avec celle-ci, on en conclut à une modification du profil sens travers de l'orientation des fibres dans la feuille continue.

2. Procédé selon la revendication 1, **caractérisé par** les étapes suivantes du procédé :
2.1 détermination répétée du profil sens travers du grammage de la feuille continue en papier ou carton ;
2.2 détermination de la/des modification(s) du profil sens travers du grammage ;
2.3 détermination des longueurs de cannelure λ de la/des modification(s) du profil sens travers du grammage ;
2.4 comparaison des longueurs de cannelure de la/des modification(s) du profil sens travers du grammage avec une grille de valeurs imposées pour décider si la modification respective peut s'accompagner d'une modification de l'orientation des fibres.

3. Procédé selon la revendication 2, **caractérisé en ce que** pour une longueur de cannelure de la modification du profil sens travers du grammage supérieure à une valeur imposée λ_{crit}, on suppose une modification du profil sens travers de l'orientation des fibres, et **en ce que** pour des plus petites longueurs de cannelure, on en conclut à une orientation inchangée des fibres.

4. Procédé selon la revendication 1, **caractérisé par** les étapes suivantes du procédé :
4.1 détermination de l'allure dans le temps du grammage de la feuille continue en papier ou carton en au moins une position concernant la laise ;
4.2 détermination de la/des variation(s) dans le temps du grammage en l'au moins une position ;
4.3 détermination de la vitesse de modification ΔFG/Δt ou respectivement de la vitesse de modification relative du grammage en cette au moins une position ;
4.4 comparaison de la/des vitesse(s) de modification avec une grille de valeurs imposées pour décider si la vitesse de modification respective peut s'accompagner d'une modification du profil sens travers de l'orientation des fibres.

5. Procédé selon la revendication 4, **caractérisé en ce que** pour une vitesse de modification du grammage (ΔFG/Δt) en une position qui est supérieure à une valeur imposée (ΔFG/Δt)_{crit,min} et inférieure à une valeur imposée (ΔFG/Δt)_{crit,max}, on suppose une modification du profil sens travers de l'orientation des fibres.

6. Procédé selon les revendications 2 et 4, **caractérisé en ce que** les étapes du procédé selon les revendications 2 et 4 sont appliquées conjointement.

7. Procédé selon les revendications 3, 5 et 6, **caractérisé en ce que** pour la reconnaissance positive d'une modification du profil sens travers de l'orientation des fibres, les critères selon la revendications 3 et selon la revendication 5 doivent être satisfaits.

8. Procédé selon l'une quelconque des revendications 3 ou 7, **caractérisé en ce que** la longueur de cannelure critique est de λ_{crit} ≤ 0,5 mètre et/ou la largeur de feuille continue/5, et de préférence la largeur de la feuille continue/2.

9. Procédé selon l'une quelconque des revendications 5 ou 7, **caractérisé en ce que** la plage critique de la vitesse de modification se situe entre
(ΔFG/Δt)_{crit,max} = 0,5 g/m² par minute
ou respectivement 0,5 % par minute et
(ΔFG/Δt)_{crit,min} = 0,5 g/m² toutes les 10 heures
ou respectivement 0,5 % toutes les 10 heures.

10. Procédé selon la revendication 1, **caractérisé en ce que**
10.1 à l'aide d'au moins deux détecteurs (5.1, 5.2, 22), le profil sens travers du grammage et le profil longitudinal du grammage de la feuille continue en papier sont mesurés,
10.2 à partir de la longueur de cannelure significative de la modification du profil sens travers du grammage, on en conclut à une possible déformation de la caisse de tête (1),
10.3 pour la vérification, l'allure du profil longitudinal du grammage est déterminée à la position de l'un au moins des maximums de la modification du profil sens travers du grammage, et
10.4 qu'à partir de l'allure caractéristique dans le temps du grammage ou respectivement de la vitesse de modification, on en conclut à une possible déformation de la caisse de tête (1) et par conséquent à une influence du profil sens travers de l'orientation des fibres.

11. Procédé selon l'une quelconque des revendications 1-10, **caractérisé en ce que** la modification du grammage est déterminée de manière indirecte via la modification du profil de la largeur de la fente de l'obturateur (1.4) sur la fente d'écoulement de la tuyère de caisse de tête.

12. Procédé selon l'une quelconque des revendications 1-10, **caractérisé en ce que** la modification du grammage est déterminée de manière indirecte via la modification des éléments de réglage (1.2) de la largeur de fente de l'obturateur (1.4) sur la fente d'écoulement de la tuyère de caisse de tête.

13. Procédé selon l'une quelconque des revendications 1-10, **caractérisé en ce que** la modification du grammage est déterminée de manière indirecte via la modification du débit de matière solide dans les sections de la caisse de tête (1).

14. Procédé selon l'une quelconque des revendications 1-10, **caractérisé en ce que** la modification du grammage est déterminée de manière indirecte via la modification des éléments de réglage pour le réglage du débit de matière solide dans les sections de la caisse de tête (1 ).

15. Procédé pour la correction d'une modification du profil sens travers de l'orientation des fibres en au moins une position d'une feuille continue en papier ou carton en mouvement lors du processus de fabrication sur une machine à papier ou carton, **caractérisé en ce que** pour la reconnaissance de la modification du profil sens travers de l'orientation des fibres, un procédé selon l'une quelconque des revendications 1-14 est utilisé et **en ce qu'**après la modification du profil sens travers de l'orientation des fibres, on commande à contre-courant via un réglage sur l'obturateur (1.4) de la caisse de tête (1) de la machine.

16. Procédé pour la correction d'une modification du profil sens travers de l'orientation des fibres en au moins une position d'une feuille continue en papier ou carton en mouvement lors du processus de fabrication sur une machine à papier ou carton, **caractérisé en ce que** pour la reconnaissance de la modification du profil sens travers de l'orientation des fibres, un procédé selon l'une quelconque des revendications 1-14 est utilisé et **en ce qu'**après la modification du profil sens travers de l'orientation des fibres, on commande à contre-courant moyennant une modification du débit de la suspension pâteuse en une ou plusieurs sections de la caisse de tête (1) de la machine.

17. Procédé selon la revendication 16, **caractérisé en ce que** dans des sections individuelles de la caisse de tête (1), de la suspension pâteuse est amenée et/ou évacuée.

18. Procédé pour la correction d'une modification du profil sens travers du grammage et du profil sens travers de l'orientation des fibres en au moins une position d'une feuille continue en papier ou carton en mouvement lors du processus de fabrication sur une machine à papier ou carton, avec une caisse de tête (1) réglée de manière sectionnelle pour la concentration de pâte, laquelle présente également un moyen (1.2) pour l'influence sectionnelle de la fente d'écoulement, **caractérisé en ce que** pour une modification nécessaire du profil sens travers du grammage pour la reconnaissance d'une modification du profil sens travers de l'orientation des fibres qui l'accompagne éventuellement, un procédé de reconnaissance selon l'une quelconque des revendications 1-14 est utilisé et **en ce qu'**ensuite, en cas de modification positive reconnue du profil sens travers de l'orientation des fibres, une correction du profil sens travers du grammage est entreprise via un réglage sur la fente d'écoulement de la caisse de tête (1), alors qu'en cas d'exclusion d'une modification du profil sens travers de l'orientation des fibres, la correction du profil sens travers du grammage est entreprise par modification du profil de la concentration de pâte.

19. Procédé pour la correction d'une modification du profil sens travers du grammage et du profil sens travers de l'orientation des fibres en au moins une position d'une feuille continue en papier ou carton en mouvement lors du processus de fabrication sur une machine à papier ou carton, avec une caisse de tête (1) réglée de manière sectionnelle pour la concentration de pâte et réglée de manière sectionnelle pour le flux de volume, **caractérisé en ce qu'**en cas de correction nécessaire du profil sens travers du grammage pour la reconnaissance d'une modification du profil sens travers de l'orientation des fibres qui l'accompagne éventuellement, un procédé de reconnaissance selon l'une quelconque des revendications 1-14 est utilisé et qu'ensuite, en cas de modification positive reconnue du profil sens travers de l'orientation des fibres, une correction du profil sens travers du grammage est entreprise via une modification des flux de volumes sectionnels dans la caisse de tête (1 ), alors qu'en cas d'exclusion d'une modification du profil sens travers de l'orientation des fibres, la correction du profil sens travers du grammage est entreprise par modification du profil de la concentration de pâte.

20. Machine à papier ou carton avec un dispositif pour la reconnaissance d'une modification du profil sens travers de l'orientation des fibres d'une feuille continue en papier ou carton lors du processus de fabrication sur la machine à papier ou carton, moyennant quoi le dispositif présente les caractéristiques suivantes :
20.1 au moins un détecteur (5.1, 5.2, 22) avec une unité d'évaluation (7) pour la détermination du profil sens travers du grammage de la feuille continue en papier ou carton ou d'un profil sens travers d'une grandeur de mesure en corrélation et/ou au moins un détecteur (5.1, 5.2, 22) avec une unité d'évaluation (7) pour la détermination de l'allure dans le temps du profil longitudinal du grammage de la feuille continue de papier ou carton en au moins une position par rapport à la laise ;
20.2 au moins un moyen (8) pour la détermination de la/des modification(s) du profil sens travers du grammage ou respectivement de la grandeur en corrélation, et pour la détermination des longueurs de cannelure λ de la/des modification(s) et/ou au moins un moyen (8) pour la détermination de la vitesse de modification ΔFG/Δt ou respectivement de la vitesse de modification relative du grammage en cette au moins une position par rapport à la laise ;
20.3 au moins un moyen (8) pour comparer les longueurs de cannelure du profil sens travers des modifications et/ou de la/des vitesse(s) de modification avec une grille de valeurs imposées, pour décider si la modification respective et/ou la vitesse de modification peut s'accompagner d'une modification du profil sens travers de l'orientation des fibres et
20.4 une unité de sortie pour indiquer la modification du profil sens travers de l'orientation des fibres.

21. Machine selon la revendication 20, **caractérisée en ce qu'**au moins un des moyens cités (8) présente une unité de calcul avec un programme d'analyse correspondant, ou respectivement un sous-programme d'analyse.

22. Machine selon la revendication 20 ou 21, **caractérisée en ce que** les détecteurs (5.1 , 5.2, 22) pour la détermination du profil sens travers du grammage et du profil longitudinal du grammage bénéficient de moyens pour le déplacement commandé transversalement au sens de la machine.

23. Machine selon l'une quelconque des revendications 20-22, **caractérisée en ce qu'**un premier détecteur (5.2) peut être déplacé transversalement au sens de la machine et **en ce qu'**un deuxième détecteur (5.1, 22) est aménagé de manière fixe.

24. Machine selon l'une quelconque des revendications 20-23, **caractérisée en ce qu'**au moins un des détecteurs (5.1, 5 .2) ou un autre détecteur (22) est prévu dans la zone du jet de suspension pâteuse.

25. Machine selon l'une quelconque des revendications 20-24, **caractérisée en ce qu'**au moins un des détecteurs (5.1, 5.2) ou un autre détecteur (22) est prévu dans la zone du mouleur (2).

26. Machine selon l'une quelconque des revendications 20-25, **caractérisée en ce qu'**au moins un des détecteurs (5.1, 5.2) ou un autre détecteur (22) est prévu dans la zone de la partie de pressage (3).

27. Machine selon l'une quelconque des revendications 20-26, **caractérisée en ce qu'**au moins un des détecteurs (5.1, 5.2) ou un autre détecteur (22) est prévu dans la zone de la partie sèche (4).

28. Machine selon l'une quelconque des revendications 20-27, **caractérisée en ce qu'**au moins un des détecteurs (5.1, 5.2) ou un autre détecteur (22) est prévu dans la zone entre le mouleur (2) et la partie de pressage (3).

29. Machine selon l'une quelconque des revendications 20-28, **caractérisée en ce qu'**au moins un des détecteurs (5.1, 5.2) ou un autre détecteur (22) est prévu dans la zone entre la partie de pressage (3) et la partie sèche (4).

30. Machine selon l'une quelconque des revendications 20-29, **caractérisée en ce qu'**au moins un des détecteurs est adapté pour la mesure de l'épaisseur de couche, ou respectivement la mesure de l'absorption de rayonnements radioactifs ou de la lumière ou d'ultrasons, ou respectivement pour la mesure de l'épaisseur des rayons et/ou la vitesse de rayon.
